# EUROPEAN PATENT APPLICATION

(11) **EP 4 462 910 A1**
(43) Date of publication of application: **13.11.2024**
(21) Application number: 23737037.4
(22) Date of filing: 04.01.2023
(51) Int. Cl.: H04W 72/04

(54) **PRACH REPETITION TRANSMISSION METHOD, TERMINAL, AND NETWORK SIDE DEVICE**

(30) Priority: 05.01.2022 CN 202210006534
(71) Applicant: VIVO MOBILE COMMUNICATION CO., LTD., Dongguan, Guangdong 523863 (CN)
(72) Inventor: WU, Kai, Dongguan, Guangdong 523863 (CN); YANG, Kun, Dongguan, Guangdong 523863 (CN)
(74) Representative: Lavoix
(86) International application number: PCT/CN2023/070394
(87) International publication number: WO 2023/131174

(57) **Abstract**

This application discloses a PRACH repetition transmission method, a terminal, and a network-side device, pertaining to the field of communication technologies. The PRACH repetition transmission method according to embodiments of this application includes: obtaining, by a terminal, resource configuration information for physical random access channel PRACH repetition transmission, where the resource configuration information includes a resource configuration type for the PRACH repetition transmission; determining, by the terminal based on the resource configuration type, a random access channel occasion RO used for the PRACH repetition transmission; and performing, by the terminal, PRACH repetition transmission based on the RO.

## Description

### CROSS-REFERENCE TO RELATED APPLICATIONS

This application claims priority to Chinese Patent Application No. 202210006534.X, filed in China on January 5, 2022, which is incorporated herein by reference in its entirety.

### TECHNICAL FIELD

This application pertains to the field of communication technologies, and in particular, relates to a PRACH repetition transmission method, a terminal, and a network-side device.

### BACKGROUND

In the prior art, a random access procedure may be a contention-based random access procedure or a contention-free random access procedure. The random access procedure may be a 4-step random access procedure (also referred to as a Type (Type)-1 random access procedure) or a 2-step random access procedure (also referred to as a Type-2 random access procedure).

Physical random access channel (Physical Random Access Channel, PRACH) repetition (repetition) transmission in time domain can improve PRACH coverage. The existing random access procedure does not support PRACH repetition transmission. If PRACH repetition transmission is performed according to an existing PRACH resource configuration scheme, this may lead to long random access delay and additional signaling overheads.

### SUMMARY

Embodiments of this application provide a PRACH repetition transmission, a terminal, and a network-side device, so as to resolve the problem of long random access delay caused by PRACH repetition transmission performed according to a PRACH resource allocation scheme in the related art.

According to a first aspect, a PRACH repetition transmission method is provided, applied to a terminal, where the method includes:
obtaining, by a terminal, resource configuration information for physical random access channel PRACH repetition transmission, where the resource configuration information includes a resource configuration type for the PRACH repetition transmission;
determining, by the terminal based on the resource configuration type, a random access channel occasion (RACH Occasion, RO) used for the PRACH repetition transmission; and
performing, by the terminal, PRACH repetition transmission based on the RO.

According to a second aspect, a PRACH repetition transmission apparatus is provided, including:
a first obtaining module, configured to obtain resource configuration information for physical random access channel PRACH repetition transmission, where the resource configuration information includes a resource configuration type for the PRACH repetition transmission;
a first determining module, configured to determine, based on the resource configuration type, a random access channel occasion RO used for the PRACH repetition transmission; and
a first transmission module, configured to perform PRACH repetition transmission based on the RO.

According to a third aspect, a PRACH repetition transmission method is provided, applied to a network-side device, where the method includes:
obtaining, by a network-side device, resource configuration information for PRACH repetition transmission, where the resource configuration information includes a resource configuration type for the PRACH repetition transmission; and
sending, by the network-side device, the resource configuration information to a terminal.

According to a fourth aspect, a PRACH repetition transmission apparatus is provided, including:
a first obtaining module, configured to obtain resource configuration information for physical random access channel PRACH repetition transmission, where the resource configuration information includes a resource configuration type for the PRACH repetition transmission;
a first determining module, configured to determine, based on the resource configuration type, a random access channel occasion RO used for the PRACH repetition transmission; and
a first transmission module, configured to perform PRACH repetition transmission based on the RO.

According to a fifth aspect, a terminal is provided, where the terminal includes a processor and a memory, and the memory stores a program or instructions capable of running on the processor. When the program or instructions are executed by the processor, the steps of the method according to the first aspect are implemented.

According to a sixth aspect, a terminal is provided, including a processor and a communication interface, where the processor is configured to obtain resource configuration information for physical random access channel PRACH repetition transmission, where the resource configuration information includes a resource configuration type for the PRACH repetition transmission; and determine, based on the resource configuration type, a random access channel occasion RO used for the PRACH repetition transmission. The communication interface is configured to perform PRACH repetition transmission based on the RO.

According to a seventh aspect, a network-side device is provided, where the network-side device includes a processor and a memory, and the memory stores a program or instructions capable of running on the processor. When the program or instructions are executed by the processor, the steps of the method according to the third aspect are implemented.

According to an eighth aspect, a network-side device is provided, including a processor and a communication interface. The processor is configured to determine resource configuration information for PRACH repetition transmission, where the resource configuration information includes a resource configuration type for the PRACH repetition transmission; and the communication interface is configured to send the resource configuration information to a terminal.

According to a ninth aspect, a PRACH repetition transmission system is provided, including a terminal and a network-side device, where the terminal may be configured to perform the steps of the PRACH repetition transmission method according to the first aspect, and the network-side device may be configured to perform the steps of the PRACH repetition transmission method according to the third aspect.

According to a tenth aspect, a readable storage medium is provided, where a program or instructions are stored in the readable storage medium, and when the program or instructions are executed by a processor, the steps of the method according to the first aspect are implemented, or the steps of the method according to the third aspect are implemented.

According to an eleventh aspect, a chip is provided, where the chip includes a processor and a communication interface, the communication interface is coupled to the processor, and the processor is configured to run a program or instructions to implement the method according to the first aspect or implement the method according to the third aspect.

According to a twelfth aspect, a computer program product is provided, where the computer program product is stored in a storage medium, and the computer program product is executed by at least one processor to implement the steps of the PRACH repetition transmission method according to the first aspect or the steps of the PRACH repetition transmission method according to the third aspect.

According to a thirteenth aspect, a communication device is provided and configured to perform the steps of the method according to the first aspect or the third aspect.

In the embodiments of this application, the terminal obtains the resource configuration information for PRACH repetition transmission, determines a to-be-used resource configuration type based on the resource configuration information, determines the RO used for PRACH repetition transmission, and then performs PRACH repetition transmission on the RO. The embodiments provide flexible PRACH repetition resource configuration, which can reduce signaling overheads used for configuring additional PRACH resources, shorten a time required for completing all PRACH repetitions, and reduce the random access delay.

### BRIEF DESCRIPTION OF DRAWINGS

FIG. 1 is a block diagram of a wireless communication system to which the embodiments of this application are applicable;
FIG. 2 is a schematic diagram of SSB-to-FDM RO mapping according to an embodiment of this application;
FIG. 3 is a schematic diagram of SSB-to-TDM/FDM RO mapping according to an embodiment of this application;
FIG. 4 is a first schematic flowchart of a PRACH repetition transmission method according to an embodiment of this application;
FIG. 5 is a first schematic diagram of a RO configuration mode according to an embodiment of this application;
FIG. 6 is a second schematic diagram of a RO configuration mode according to an embodiment of this application;
FIG. 7 is a third schematic diagram of a RO configuration mode according to an embodiment of this application;
FIG. 8 is a fourth schematic diagram of a RO configuration mode according to an embodiment of this application;
FIG. 9 is a fifth schematic diagram of a RO configuration mode according to an embodiment of this application;
FIG. 10 is a sixth schematic diagram of a RO configuration mode according to an embodiment of this application;
FIG. 11 is a seventh schematic diagram of a RO configuration mode according to an embodiment of this application;
FIG. 12 is a second schematic flowchart of a PRACH repetition transmission method according to an embodiment of this application;
FIG. 13 is a first schematic structural diagram of a PRACH repetition transmission apparatus according to an embodiment of this application;
FIG. 14 is a second schematic structural diagram of a PRACH repetition transmission apparatus according to an embodiment of this application;
FIG. 15 is a schematic structural diagram of a communication device according to an embodiment of this application;
FIG. 16 is a schematic structural diagram of a terminal according to an embodiment of this application; and
FIG. 17 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

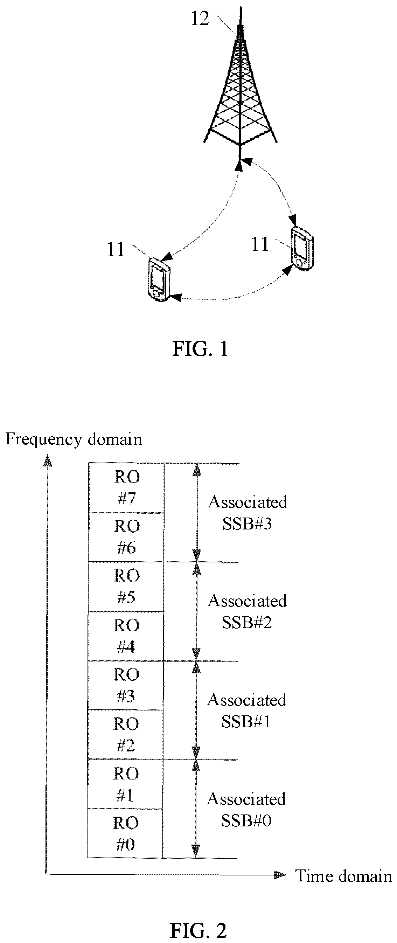

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

For description of the embodiments of this application, some concepts used in the following description are first described.

### 1. Random access procedure

The random access procedure may be a contention-based random access procedure or a contention-free random access procedure. The random access procedure may be a 4-step random access procedure (also referred to as a Type-1 random access procedure) or a 2-step random access procedure (also referred to as a Type-2 random access procedure).

### (1) 4-step random access procedure (4-step Random Access Channel, 4-step RACH)

In the contention-based 4-step random access procedure, the UE first sends Msg1 including a preamble (preamble) to the network-side device. After detecting the preamble, the network sends an Msg2/random access response (Random Access Response, RAR) message, including an index of the preamble detected by the network-side device and an uplink radio resource allocated to the UE for Msg3 transmission. After receiving the Msg2, the UE determines that at least one of indexes of preambles carried in Msg2 is consistent with an index of the preamble sent by itself, and then sends, based on the resource indicated by the RAR, an Msg3 containing contention resolution information. After receiving the Msg3, the network-side device sends an Msg4 containing the contention resolution information. The UE receives the Msg4, and determines that the resolution information is consistent with that sent by itself in the Msg3. In this way, the 4-step random access is completed.

The network-side device adds uplink grant (Uplink grant, UL grant) information to the RAR to indicate scheduling information for Msg3 physical uplink shared channel (Physical Uplink Shared Channel, PUSCH), and adds information such as a RAPID (RACH preamble ID), a temporary cell radio network temporary identifier (Temporary Cell Radio Network Temporary Identifier, TC-RNTI), and a timing advance (Timing Advance, TA). If the network-side device receives no Msg3 PUSCH, retransmission of Msg3 PUSCH may be scheduled on a physical downlink control channel (Physical downlink control channel, PDCCH) scrambled by TC-RNTI.

For the contention-based random access procedure, different UEs randomly select preambles for transmission; as a result, different UEs may select a same preamble for transmission on a same time-domain radio resource. Such case may be understood as a preamble collision between UEs. In this case, different UEs may receive a same RAR, and then different UEs may transmit Msg3 PUSCHs based on scheduling information in the RAR UL grant. In a case that repetition transmission of Msg3 PUSCH is not supported, the network-side device can parse out a PUSCH (including contention resolution information) transmitted only by one UE on one Msg3 PUSCH scheduling resource, so the network-side device may add, to an Msg4, the contention resolution information received in the Msg3. If the contention resolution information received by the UE in the Msg4 matches the contention resolution information sent by the UE in the Msg3 PUSCH, the UE considers the contention resolution successful. If it is not matched, the contention resolution is considered unsuccessful.

If the contention resolution is unsuccessful, the UE reselects a RACH transmission resource for PRACH transmission, to perform a next random access attempt.

### (2) 2-step random access procedure (2-step RACH)

The first step is that the UE sends an MsgA to the network side. After receiving the MsgA, the network side sends an MsgB message to the UE. If the UE does not receive the MsgB within a specific period of time, the UE increments a counter for counting the number of MsgA transmissions by 1 and sends an MsgA again. If the counter for counting the number of MsgA transmissions reaches a specific threshold, the UE switches from the 2-step random access procedure to the 4-step random access procedure. The MsgA includes an MsgA preamble part and an MsgA PUSCH part. The preamble part is sent on a RO for the 2-step RACH, and the PUSCH part is sent on an MsgA PUSCH resource associated with MsgA preamble transmission and RO. The MsgA PUSCH resource is a set of PUSCH resources configured for each physical random access channel slot (PRACH slot), including a time-frequency resource and a demodulation reference signal (Demodulation Reference Signal, DMRS) resource, where the RO indicates a physical random access channel transmission occasion (PRACH transmission occasion).

### 2. Selection of random access resources and synchronization signal and PBCH block (Synchronization Signal and PBCH block, SSB)-to-RO mapping (mapping).

In NR, at one time domain position for PRACH transmission, a plurality of frequency division multiplexing (Frequency Division Multiplex, FDM) physical random access channel transmission occasions (PRACH transmission occasion) may be configured for a cell, which are also known as PRACH occasions, and referred to as ROs here for simplicity. A quantity of FDM ROs at one moment may be {1,2,4,8}. As shown in FIG. 2, at one moment, there are eight RO resources distributed on different frequencies.

A random access preamble (Preamble) can be transmitted only on a time domain resource (namely, RO resource) configured based on a PRACH configuration index (PRACHConfigurationIndex) parameter, and the random access preamble can be transmitted only on a frequency domain resource configured by a prach-FDM parameter.

The PRACH frequency domain resource is *n_{RA}* ∈ {0,1, ··· *M* - 1}, where M is equal to the upper-layer parameter prach-FDM. During initial access, the PRACH frequency domain resources *n_{RA}* are numbered in an ascending order starting from a RO resource with a lowest frequency in an initial active uplink bandwidth part (initial active uplink bandwidth part); otherwise, the PRACH frequency domain resources *n_{RA}* are numbered in an ascending order starting from a RO resource with a lowest frequency in an active uplink bandwidth part (active uplink bandwidth part). As shown in FIG. 2, RO resources are numbered RO#0 to RO#7 sequentially in an ascending order of frequency.

In NR, there is an association between a RO and an SSB actually transmitted.

One SSB may be associated with a plurality of ROs, or a plurality of SSBs may be associated with one RO (in this case, different SSBs correspond to different preamble codes). Generally, the base station may use different beams to send different SSBs, and correspondingly, the UE sends a preamble on a RO associated with an SSB. In this way, based on a strength of a received downlink beam/SSB, the UE selects a RO/"combination of RO and preamble" associated with an SSB with good signal to send an Msg1. In this way, based on the RO/"combination of RO and preamble" of the received preamble, the network-side device can determine an SSB selected by the UE, and send an Msg2 on a downlink beam corresponding to the SSB to ensure reception quality of downlink signals.

As shown in FIG. 2, the number of FDM ROs at one moment is 8, and the number of SSBs actually transmitted is 4, namely SSB#0, SSB#1, SSB#2, and SSB#3, each SSB being associated with two ROs. If the UE transmits a PRACH/Msg1/Preamble on a RO corresponding to SSB#0, the UE selects one RO from RO#0 and RO#1 to transmit the PRACH.

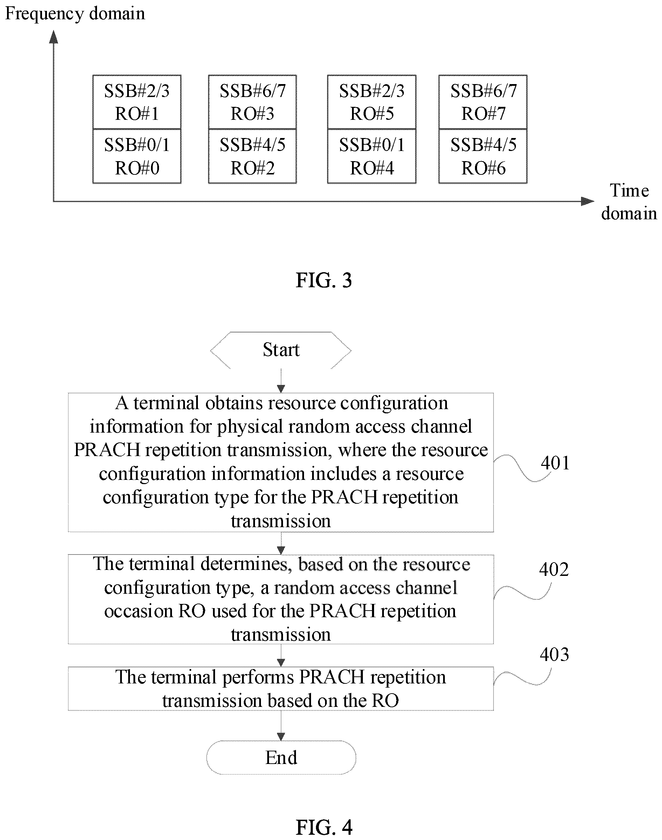

As shown in FIG. 3, the number of frequency division multiplexing (Frequency Division Multiplex, FDM) ROs at one moment is 2, and the number of SSBs actually transmitted is 8, namely SSB#0, SSB#1, ..., and SSB#7, every two SSBs being associated with one RO. When a plurality of SSBs share one RO, preamble sets associated with the plurality of SSBs are different, that is, a same preamble cannot belong to the preamble sets associated with different SSBs at the same time. Using RO#0 in FIG. 2 as an example, there are 60 preambles associated with SSBs, preambles with indexes (index) of 0 to 29 being associated with SSB#0 and preambles with indexes of 30 to 59 being associated with SSB#1. It should be noted that each square in FIG. 2 is used to represent a RO instead of an SSB, where the SSB indicated refers to which SSB/SSBs the RO is associated with.

Before PRACH transmission, the UE firstly selects a resource. The UE first selects an SSB with an RSRP higher than a threshold based on a reference signal received power (Reference Signal Received Power, RSRP) of a received beam (beam) or SSB; if RSRPs of a plurality of SSBs are higher than the threshold, the terminal may select any one SSB with an RSRP higher than the threshold; and if there is no SSB with an RSRP higher than the threshold, the UE selects one SSB based on implementation.

Based on the network (Network, NW) configuration, the UE obtains a correspondence between SSBs and ROs. After an SSB is selected, a RO corresponding to the selected SSB is used as a RO for PRACH/Preamble transmission. If the selected SSB is associated with a plurality of ROs, the terminal may select one of them for PRACH/preamble transmission.

For example, in the embodiment shown in FIG. 2, assuming that the UE selects SSB#1, the UE may select one of RO#2 and RO#3 for PRACH/preamble transmission. In the embodiment shown in FIG. 3, if the UE selects SSB#1, the UE may select an available RO closest to a current time in ROs (RO#0 or RO#4) associated with SSB#1 for PRACH/preamble transmission.

In the selected RO, the UE selects one preamble from a preamble set associated with the selected SSB to send the PRACH. As shown in FIG. 3, one RO is associated with two SSBs, and preambles in an available preamble set associated with SSBs in one RO may be divided into two subsets, each subset corresponding to one SSB. The UE selects a specific preamble sequence from a preamble subset corresponding to the selected SSB, for PRACH transmission.

The association between SSBs and PRACH resources includes an SSB to PRACH occasion mapping cycle (SSB to PRACH occasion mapping cycle), an SSB to PRACH occasion mapping association period (SSB to PRACH occasion mapping association period), and an SSB to PRACH occasion association pattern period (SSB to PRACH occasion association pattern period). The main purpose of these periods is to complete at least one random access attempt within one predefined period of time and to repeat a mapping between PRACH resources and SSBs in a specific pattern. During PRACH repetition, PRACH repetition needs to ensure that such a pattern cannot be broken.

It should be noted that in the embodiments of this application, both the RACH occasion (that is, RO) and PRACH occasion refer to time-frequency resources required for sending a PRACH sequence, that is, both the RACH occasion and PRACH occasion may be denoted by RO.

The following describes in detail a PRACH repetition transmission method provided in the embodiments of this application by using some embodiments and application scenarios thereof with reference to the accompanying drawings.

As shown in FIG. 4, an embodiment of this application provides a PRACH repetition transmission method, applied to a terminal, and the method includes the following steps.

Step 401: The terminal obtains resource configuration information for physical random access channel PRACH repetition transmission, where the resource configuration information includes a resource configuration type for the PRACH repetition transmission.

In this embodiment, a definition of the PRACH repetition transmission is different from that of PRACH retransmission. PRACH repetition in this embodiment is a repetition transmission performed during each PRACH initial transmission or retransmission, and PRACH repetition occurs only before end of a random access response window (RAR window).

The resource configuration information for PRACH repetition transmission may be configured by the network-side device, that is, the network-side device configures resources for PRACH repetition transmission for the terminal, and the PRACH repetition resource is a PRACH resource used for sending a PRACH repetition. A PRACH resource not supporting PRACH repetition is a PRACH resource used for sending PRACH without repetition. The PRACH resource may be a PRACH time-frequency resource and/or PRACH sequence.

The resource configuration information may include one or more resource configuration types, and the resource configuration type is used to indicate a resource configuration mode for PRACH repetition.

Step 402: The terminal determines, based on the resource configuration type, a random access channel occasion RO used for the PRACH repetition transmission.

The resource configuration information is used to indicate a RO used for PRACH repetition transmission, and different resource configuration types indicate different RO configuration modes. Optionally, the resource configuration information is broadcast by the network-side device. After receiving the broadcast resource configuration information, one or more UEs may select a to-be-applied target resource configuration type from one or more resource configuration types, and determine, based on indication of the target resource configuration type, a RO used for PRACH repetition transmission.

It should be noted that the RO used for the PRACH repetition transmission may be one or more ROs.

Step 403: The terminal performs PRACH repetition transmission based on the RO.

After determining the RO used for PRACH repetition transmission, the terminal performs PRACH repetition transmission on the determined RO.

In this embodiment of this application, the terminal obtains the resource configuration information for PRACH repetition transmission, determines a to-be-used resource configuration type based on the resource configuration information, determines the RO used for PRACH repetition transmission, and then performs PRACH repetition transmission on the RO. This embodiment provides flexible PRACH repetition resource configuration, which can reduce signaling overheads used for configuring additional PRACH resources, shorten a time required for completing all PRACH repetitions, and reduce the random access delay.

In an optional embodiment, the resource configuration type includes at least one of the following:
(1) All ROs for PRACH non-repetition transmission are used for the PRACH repetition transmission.

The PRACH non-repetition transmission is a PRACH transmission without PRACH repetition, and the PRACH non-repetition transmission includes PRACH non-repetition transmissions with one or more characteristics, such as PRACH transmissions corresponding to different network slices, a PRACH transmission corresponding to small data transmission, and different PRACH transmissions corresponding to different UEs.

The resource configuration type (1) indicates that the PRACH repetition transmission uses all ROs for PRACH non-repetition transmission, that is, the PRACH repetition transmission and one or more types of PRACH non-repetition transmissions use common configured ROs (also referred to as shared ROs). The common configured RO is a RO that may be used for both PRACH repetition transmission or may be used for PRACH non-repetition transmission, that is, all ROs used for sending PRACH repetition share all ROs of one or more types of PRACH non-repetition transmissions. For example, if one specific type of PRACH non-repetition transmission is configured with two ROs, PRACH repetition shares the two ROs, that is, the two ROs may be used for PRACH repetition transmission or may be used for PRACH non-repetition transmission.

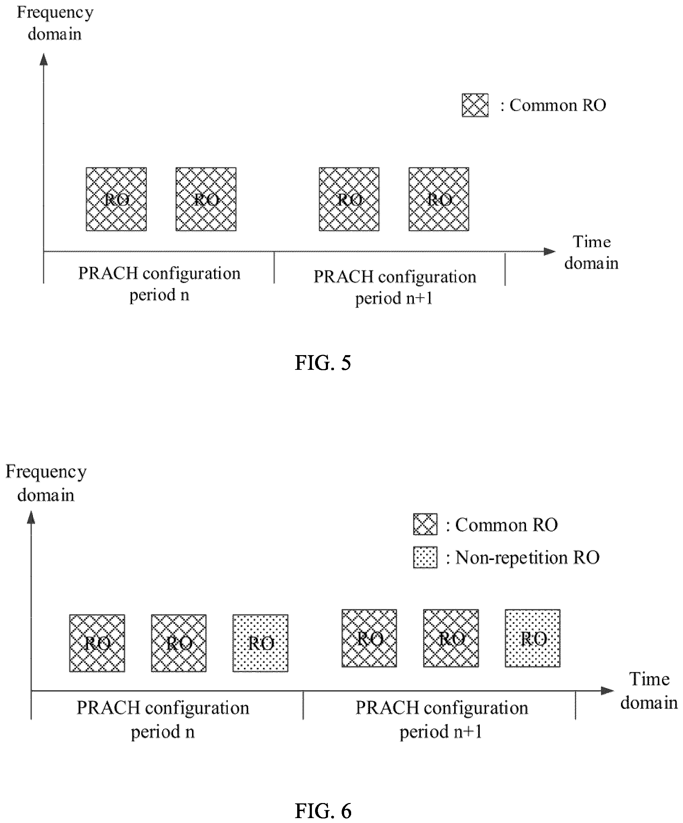

If the terminal determines to use a RO indicated in the type (1) for PRACH repetition transmission, the terminal performs PRACH repetition transmission by using a RO configured for PRACH non-repetition transmission. This resource configuration type does not require additional PRACH configuration signaling to separately configure a PRACH time-frequency resource for PRACH repetition transmission. The following is described by using specific examples:
For example, as shown in FIG. 5, in each PRACH configuration period, two ROs are configured for RA. The two ROs (that is, common ROs) may be used for sending PRACH repetition and PRACH without repetition, each using a different PRACH sequence combination, that is, both the PRACH repetition transmission and the PRACH non-repetition transmission share the two ROs.

(2) Part of ROs for PRACH non-repetition transmission are used for the PRACH repetition transmission.

In the resource configuration type (2), the PRACH non-repetition transmission includes PRACH non-repetition transmissions with one or more characteristics, and the resource configuration type (2) indicates that PRACH repetition transmission uses part of ROs for the PRACH non-repetition transmission, that is, the PRACH repetition transmission and one or more types of PRACH non-repetition transmissions use part of the common configured ROs. The common configured RO is a RO that may be used for PRACH repetition transmission or may be used for PRACH non-repetition transmission, that is, a RO subset for one specific type (or multiple types) of non-repetitive PRACH transmission is shared by the PRACH repetition transmission. For example, one specific type of PRACH non-repetition transmission is configured with a total of three ROs, of which two ROs are shared by the PRACH repetition. That is, the two ROs may be used for PRACH repetition transmission or may be used for PRACH non-repetition transmission, and the remaining one RO is used only for PRACH non-repetition transmission.

For example, as shown in FIG. 6, three ROs are configured in each PRACH configuration period, of which two ROs (that is, common ROs) are used for sharing between PRACH repetition and PRACH transmission without repetition, while the third RO (that is, a non-repetition RO) is not used for PRACH repetition transmission, but used only for PRACH non-repetition transmission.

In this embodiment, additional PRACH configuration signaling is not required for separately configuring a PRACH time-frequency resource for PRACH repetition transmission, and some ROs may be further allowed to be used only for PRACH transmission without repetition, which can reduce impact of PRACH repetition characteristics on conventional PRACH transmission without PRACH repetition.

(3) An independently configured first RO (that is, a separate RO or a separately configured RO) is used for the PRACH repetition transmission.

In the resource configuration type (3), the PRACH non-repetition transmission includes PRACH non-repetition transmissions with one or more characteristics, and the resource configuration type (3) indicates that the PRACH repetition transmission uses an independently configured RO, that is, all PRACH repetitions use additionally configured ROs and do not share ROs used for PRACH transmissions without repetition.

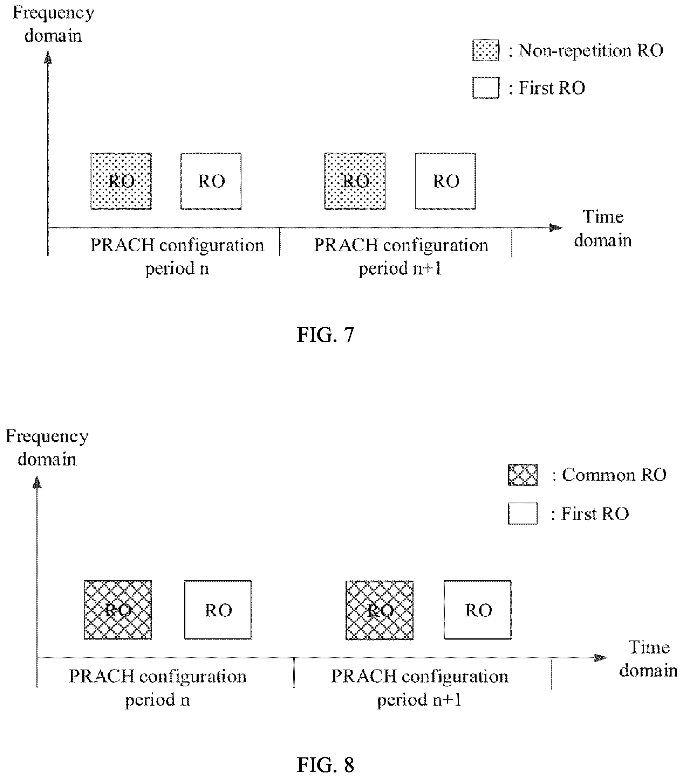

For example, as shown in FIG. 7, two ROs are configured in each PRACH configuration period, of which one RO (that is, a first RO) is used for PRACH repetition transmission and the other RO (that is, a non-repetition RO) is used for PRACH transmission without repetition. This RO configuration mode does not affect the RA without repetition.

It should be noted that the first RO is used only for PRACH repetition transmission, and may include one or more ROs.

Optionally, the resource configuration type may alternatively be a combination of the foregoing resource configuration type (1) and resource configuration type (3), that is, the PRACH repetition transmission uses all ROs for PRACH non-repetition transmission, and the PRACH repetition transmission also has the first RO independently configured. To be specific, PRACH transmissions with repetition share all ROs used for sending PRACH transmissions without repetition, and additional ROs are also separately configured for remaining PRACH repetition transmissions.

For example, as shown in FIG. 8, two ROs are configured in each PRACH configuration period. The 1st RO (that is, a common RO) may be used for PRACH transmission with repetition or may be used for PRACH non-repetition transmission, and the other RO (that is, a first RO) is used only for sending PRACH transmission with repetition. In this embodiment, the RO for PRACH non-repetition transmission is shared by PRACH repetition transmission, and an additional RO is specially configured for the PRACH with PRACH repetition.

In this embodiment, on the basis of sharing a RO for sending PRACH non-repetition transmission, an additionally configured RO is introduced and is specially used for sending PRACH repetition, so that a plurality of PRACH repetition transmissions may be completed in a short time, thus reducing a random access delay and also ensuring reliability of PRACH transmission through the PRACH repetition itself. Especially in a case that the PRACH configuration period is relatively long and the density of ROs configured in each period is relatively low, such additionally configured RO specially used for PRACH repetition is particularly important.

Optionally, the resource configuration type may alternatively be a combination of the foregoing resource configuration type (2) and resource configuration type (3), that is, the PRACH repetition transmission uses part of ROs for PRACH non-repetition transmission, and the PRACH repetition transmission also has the first RO independently configured. That is, the PRACH transmission with repetition shares part of ROs used for sending PRACH transmissions without repetition. In this case, there are also remaining ROs used only for sending PRACH without repetition, and an additional RO is separately configured for remaining PRACH repetition transmissions.

In this embodiment, RA with PRACH repetition shares one or more ROs for RA without PRACH repetition, and remaining ROs for RA with PRACH repetition are separately configured. RA with PRACH repetition does not need to share all ROs for RA without PRACH repetition, but shares only one subset in these ROs.

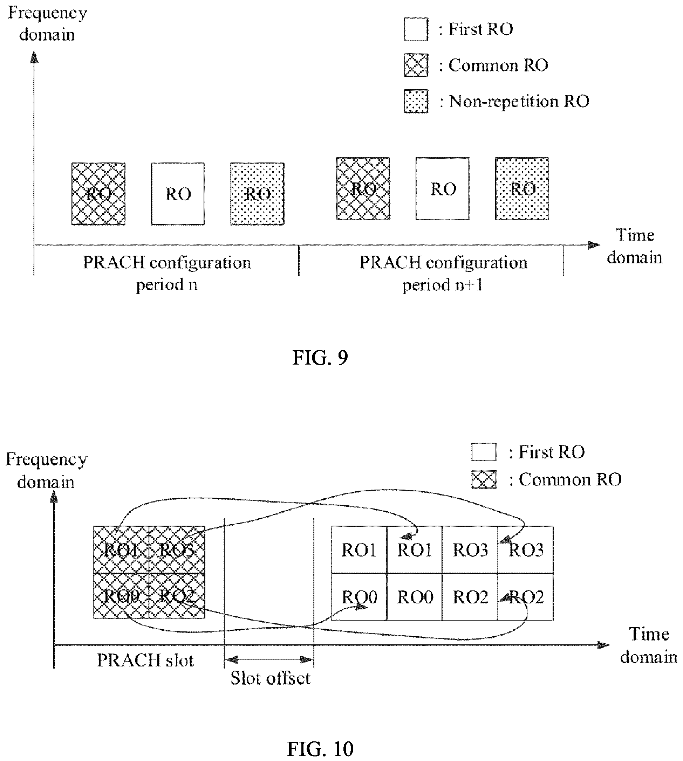

For example, as shown in FIG. 9, three ROs are configured in each PRACH configuration period. The 1st RO (that is, a common RO) is used for both PRACH repetition transmission and PRACH non-repetition transmission, the 2nd RO (that is, a first RO) is used only for PRACH repetition transmission, and the 3rd RO (that is, a non-repetition RO) is used only for PRACH transmission without PRACH repetition.

This embodiment can reduce a random access delay with PRACH repetition, and can reduce impact of introduced PRACH repetition on PRACH non-repetition.

In an optional embodiment, the first RO is a RO configured relative to the common RO; or
the first RO is a RO configured relative to the PRACH slot in which the common RO is located.

In this embodiment, the first RO (that is, an independently configured RO only used for PRACH repetition) may be a RO configured relative to the common RO, and the common RO is a RO that may be used for PRACH repetition or may be used for PRACH non-repetition transmission. Optionally, when there are a plurality of common configured ROs, they may be configured relative to the 1st common RO or relative to the last common RO; or they may be configured relative to a start time of the common RO or relative to an end time of the common RO. For example, one or more ROs are additionally configured separately relative to a common configured RO (that is, a shared RO) used for the 1st PRACH repetition transmission.

The first RO may also be a RO configured relative to the PRACH slot in which the common RO is located, for example, being relative to a group (including one or more ROs) of common configured ROs (that is, shared ROs) in the PRACH slot, or being a group (one or more) of separate ROs configured relative to a PRACH slot including a group (including one or more ROs) of common configured ROs (that is, shared ROs).

In an optional embodiment, the method further includes obtaining first information corresponding to the first RO; and determining the first RO based on the first information.

In this embodiment, the first information may be sent by a network-side device or a predefined rule; or part of the first information is sent by the network-side device, and the rest part of information is a predefined rule. Optionally, the first information includes at least one of the following:
1) The number of PRACH repetition transmissions; for example, configuring a group of PRACH repetition factors.
2) A symbol-level offset relative to an end moment of a common RO (that is, a common configured RO that may be used for PRACH repetition transmission or may be used for PRACH non-repetition transmission), where the common RO is a common configured RO used for PRACH repetition transmission and PRACH non-repetition transmission.
3) A symbol-level offset relative to a start moment of the common RO.
4) Symbol allocation in a slot in which the first RO is located is the same as symbol allocation in a slot in which the common RO is located, where such information may be a predefined rule, that is, it is defined that symbol allocation in a slot in which an additionally configured RO is located is the same as symbol allocation in a slot in which an associated common RO is located.
5) Indication information for indicating the symbol allocation in the slot in which the first RO is located, where the indication information is indicated by a PRACH configuration table of the common RO; that is, symbol allocation in a slot in which an additionally configured RO is located may be indicated by one column (or row) or multiple columns (or rows) in a PRACH configuration table of an associated common RO.
   For example, one or more indexes are additionally indicated in a system message to correspond to one or more rows in the RO resource configuration table, and one column is added to the table to indicate that the RO is located in the 1st symbol of the slot. Optionally, the table in this embodiment may be a random access configurations (Random access configurations) table in a related protocol.
6) A symbol-level offset relative to an end moment of the slot in which the first RO is located.
7) A symbol-level offset relative to a start moment of the slot in which the first RO is located.
8) A slot-level offset relative to an end moment of the slot in which the common RO is located, that is, one slot-level offset from the end time point of the slot in which the common RO is located.
9) A slot-level offset relative to a start moment of the slot in which the common RO is located, that is, one slot-level offset from the start time point of the slot in which the common RO is located.
10) A slot-level offset relative to an end moment of a PRACH slot in which the common RO is located.
11)A slot-level offset relative to a start moment of the PRACH slot in which the common RO is located.
12) A frequency offset relative to a first resource block (Resource Block, RB) of an active (active) uplink bandwidth part (UL BWP), where, for example, the offset is used to determine the first RB of the first RO in frequency domain in an additionally configured group of ROs.
13) The number of frequency domain multiplexing ROs. The number of PRACH repetitions can be obtained based on this parameter. For example, this parameter may be configured when the number of PRACH repetitions is not configured, or may be configured along with the number of PRACH repetitions.
14) The number of time domain multiplexing ROs. The number of PRACH repetitions can be obtained based on this parameter. For example, this parameter may be configured when the number of PRACH repetitions is not configured, or may be configured along with the number of PRACH repetitions.
15) A time interval between a plurality of time domain multiplexing ROs, where the time interval may be a guard band (guard band), which can prevent interference between ROs, and is, for example, one or more slots.
16) A frequency spacing between a plurality of frequency domain multiplexing ROs; for example, one or more physical resource blocks (Physical Resource Block, PRB).
17) A configuration parameter for a sequence (preamble) corresponding to the first RO.
18) A mapping relationship between a common RO in a PRACH slot and the first RO, that is, a mapping relationship between the common ROs in the PRACH slot (which may be all ROs in the PRACH slot or a subset of the ROs) and a group of ROs (that is, the first ROs) additionally configured relative to the PRACH slot and specially used for PRACH repetition transmission.

In this embodiment, when the first RO is configured relative to a common RO, for example, when one or more ROs (that is, the first RO) are additionally configured separately relative to a common RO (shared RO) used for the 1st PRACH repetition transmission, the configuration may be made based on one or more of 1) to 7) and 12) to 17) in the first information. When the first RO is configured relative to the PRACH slot in which the common RO is located, the configuration may be made based on one or more of 1) to 5) and 8) to 18) in the first information.

It should be noted that in this embodiment of this application, the PRACH slot is different from the slot, the slot is a slot defined based on a subcarrier spacing, the PRACH slot is a slot defined for PRACH, and one PRACH slot may include a plurality of slots.

The following describes the PRACH repetition transmission method by using an example of configuring the first RO relative to the PRACH slot in which the common RO is located.

As shown in FIG. 10, four ROs are configured in one PRACH slot, each RO being shared by the PRACH transmission without repetition and the 1st PRACH repetition transmission (that is RO0, RO1, RO2, and RO3 on the left in FIG. 10). Remaining PRACH repetition transmissions are sent in additional ROs configured relative to the PRACH slot. The total number of PRACH repetitions is 3, and four common ROs are mapped to eight first ROs. Each RO for the 1st repetition is mapped to two ROs for the 2nd repetition and the 3rd repetition in a predetermined order (the ROs for the 2nd repetition and the 3rd repetition are consecutive in time domain).

Optionally, the method further includes performing resource mapping based on the mapping relationship between the common RO in the PRACH slot and the first RO.

The performing resource mapping based on the mapping relationship between the common RO in the PRACH slot and the first RO includes: performing mapping on ROs in the PRACH slot and the first RO according to a first defined order; where a mapping ratio of the ROs in the PRACH slot to the first RO is related to the number of PRACH repetition transmissions and/or the number of common ROs.

In this embodiment, the first defined order may be directly defined in the protocol, for example, the 1st RO in the PRACH slot is mapped to consecutive (M-1) time domain ROs, and the other (M-1) time-domain ROs in each group are mapped to other ROs in each PRACH slot in an order of frequency domain first and then time domain. The mapping ratio is related to the number of PRACH repetition transmissions and/or the number of common ROs. For example, the mapping ratio may be 1:(M-1), that is, each RO (RO used for sending the 1st repetition transmission) in one PRACH slot is mapped to (M-1) ROs additionally configured relative to the PRACH slot. In this way, each PRACH repetition transmission is repeated a total of M times (including the 1st time).

Optionally, the common RO in the PRACH slot for resource mapping is a valid common RO. The first RO for resource mapping is a valid RO configured relative to the PRACH slot. That is, in this embodiment, mapping may be mapping between valid common ROs (also referred to as shared ROs) in the PRACH slot and valid ROs (that is, the first ROs) additionally configured relative to the PRACH slot.

In this embodiment, the method for determining the validity of ROs is, for example, valid for all PRACH cases with paired spectrums or additional uplink spectrums.

### For unpaired spectrums:

In a case that a common TDD uplink and downlink configuration (tdd-UL-DL-ConfigurationCommon) of the UE is not provided, if a PRACH occasion in the PRACH slot is not in front of an SS/PBCH block in the PRACH slot and is in at least N*_{gap}* symbols after a symbol for receiving the last SS/PBCH block, the PRACH occasion in the PRACH slot is valid, where N*_{gap}* is provided in a related protocol. If channelAccessMode=semistatic is provided, the PRACH occasion does not overlap a group of consecutive symbols before start of a next channel occupation time at which the UE does not perform transmission.

If tdd-UL-DL-ConfigurationCommon is provided to the UE, the PRACH occasion in the PRACH slot is valid in the following cases:
being within an UL symbol range; or
being not in front of an SS/PBCH block in the PRACH slot, being in at least N*_{gap}* symbols after the last downlink symbol, and being in at least N*_{gap}* symbols after the last SS/PBCH block symbol. N*_{gap}* is provided in the related protocol, and if channelAccessMode=semistatic is provided, the PRACH occasion does not overlap a group of consecutive symbols before the next channel occupation time starts, and there should be no transmission; and
a candidate SS/PBCH block index of the SS/PBCH block corresponds to SIB1 or an SS/PBCH block index provided by ssb-PositionsInBurst in ServingCellConfigCommon.

It should be noted that the method for determining the validity of ROs in this embodiment of this application is only an example, and the validity of ROs may be determined in other determining manners, which is not limited herein.

Optionally, the PRACH slot includes at least one common RO group, and each common RO group corresponds to one first RO group. In this embodiment, both the common RO and the first RO are configured in groups, the PRACH slot may include one or more common RO groups, and each group of common ROs corresponds to each first RO group independently configured.

Optionally, the number of PRACH repetition transmissions of different first RO groups is independently configured. In this embodiment, the number of PRACH repetition transmissions corresponding to each first RO group may be independently configured, for example, different additional RO groups (that is, the first RO group) may be configured with different quantities of PRACH repetition transmissions.

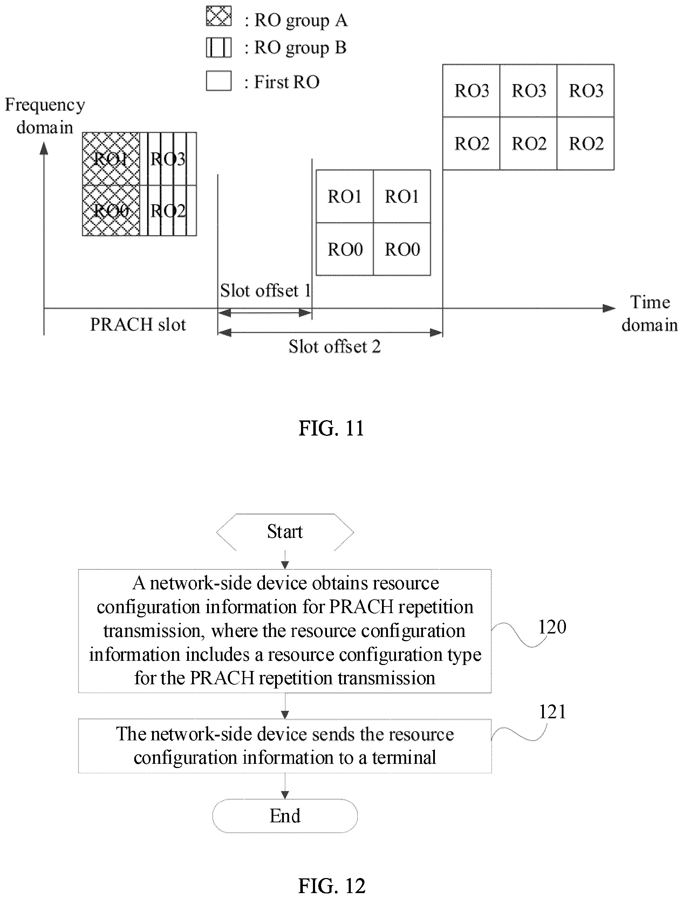

For example, as shown in FIG. 11, a total of two groups (group A and group B) of ROs are configured for PRACH non-repetition transmission and the 1st PRACH repetition transmission, where the group A is {RO0, RO1} and the group B is {RO2, RO3}. Two sets of independent additional RO groups (that is, two first RO groups) are configured. In configuration 1, two additional repetition ROs are configured for the 1st retransmission of each PRACH, and in configuration 2, three additional repetition ROs are configured for the 1st retransmission of each PRACH. Mapping between ROs in the group A and additionally configured ROs in configuration 1 is performed at a mapping ratio of 1:2, and mapping between ROs in the group B and separately configured ROs in configuration 2 is performed at a mapping ratio of 1:3. Therefore, in this embodiment, two PRACH repetition factors 3 and 4 may be supported.

In an optional embodiment, the determining, based on the resource configuration type, a RO for PRACH repetition transmission includes:
determining a target resource configuration type corresponding to the terminal from at least one resource configuration type; and determining the RO, indicated in the target resource configuration type, for the PRACH repetition transmission.

In this embodiment, a plurality of resource configuration types for PRACH repetition transmission are supported, and a to-be-used resource configuration type may be configured by the network-side device or implicitly determined based on signaling provided for PRACH repetition resource configuration. The configured resource configuration information may include one or more resource configuration types, and each resource configuration type indicates a different RO configuration mode. After obtaining the resource configuration information, the terminal selects a target resource configuration type to be applied, and determines a RO for PRACH repetition transmission based on a RO configuration mode indicated by the selected target resource configuration type.

Optionally, the determining a target resource configuration type corresponding to the terminal from at least one resource configuration type includes:
receiving radio resource control (Radio Resource Control, RRC) signaling sent by a network-side device, where the RRC signaling indicates the target resource configuration type corresponding to the terminal;
   or
determining the target resource configuration type based on whether the terminal receives the first information corresponding to the first RO.

In this embodiment, the network-side device may indicate, through RRC signaling, which resource configuration type (for example, one of the resource configuration types provided in all the above embodiments) being supported for PRACH repetition transmission. Alternatively, which resource configuration type being used depends on whether corresponding signaling is provided. For example, when no separate parameter/IE (that is, the first information) is provided for separately configuring the first RO for PRACH repetition, PRACH repetition transmission can use only a RO not for repetition.

In an optional embodiment, the performing PRACH repetition transmission includes:
in a first-type random access procedure, performing the PRACH repetition transmission;
   and/or
in a second-type random access procedure, performing the PRACH repetition transmission.

In this embodiment, the first-type random access procedure may be Type-1 random access procedure, and the second-type random access procedure may be Type-2 random access procedure. At least one of the first-type random access procedure and the second-type random access procedure is used for PRACH repetition transmission, for example:

PRACH transmission without PRACH repetition is performed in the Type-1 random access procedure and PRACH transmission with PRACH repetition is performed in the Type-2 random access procedure; or, PRACH transmission without PRACH repetition is performed in the Type-2 random access procedure and PRACH transmission with PRACH repetition is performed in the Type-1 random access procedure; or, PRACH transmission with PRACH repetition is performed in both the Type-1 random access procedure and the Type-2 random access procedure.

In an optional embodiment, the method further includes:
in a first-type random access procedure, performing the PRACH non-repetition transmission by using a common RO;
   and/or
in a second-type random access procedure, performing the PRACH non-repetition transmission by using a common RO; where
the common RO is a common configured RO used by the PRACH repetition transmission and PRACH non-repetition transmission.

In this embodiment, the first-type random access procedure may be Type-1 random access procedure, and the second-type random access procedure may be Type-2 random access procedure. A common RO in at least one random access procedure in the first-type random access procedure and the second-type random access procedure is used for PRACH repetition transmission, that is, the common RO is a common configured RO that may be used for PRACH repetition transmission or may be used for PRACH non-repetition transmission. For example, a common RO is used for PRACH non-repetition transmission in the Type-1 random access procedure, and a common RO is not used for PRACH non-repetition transmission in the Type-2 random access procedure; or, a common RO is not used for PRACH non-repetition transmission in the Type-1 random access procedure, and a common RO is used for PRACH non-repetition transmission in the Type-2 random access procedure; or, a common RO is used for PRACH non-repetition transmission in both the Type-1 random access procedure and the Type-2 random access procedure.

In this embodiment of this application, the terminal obtains the resource configuration information for PRACH repetition transmission, determines a to-be-used resource configuration type based on the resource configuration information, determines the RO used for PRACH repetition transmission, and then performs PRACH repetition transmission on the RO. This embodiment provides flexible allocation of PRACH repetition resources. When existing PRACH resources are sparse, additional allocation of PRACH occasion may be considered for PRACH repetition transmission, and when configured PRACH resources are dense, it may be considered to share the existing PRACH resources for PRACH repetition transmission. The 1st PRACH repetition is sent on a common RO, and ROs for remaining PRACH repetition transmission may be additionally configured relative to the first PRACH repetition. A mapping rule from the 1st RO to the rest ROs is introduced, which largely simulates the mapping from RO to MsgA PUSCH occasion in the 2-step RACH procedure, thereby reducing complexity of implementation and also reducing signaling overheads used for configuring additional PRACH resources. Additionally configuring PRACH resources also shortens a time required for completing all repetitions to a greater extent and reduces the random access delay.

As shown in FIG. 12, an embodiment of this application further provides a PRACH repetition transmission method, applied to a network-side device and including the following steps.

Step 120: The network-side device obtains resource configuration information for PRACH repetition transmission, where the resource configuration information includes a resource configuration type for the PRACH repetition transmission.

Step 121: The network-side device sends the resource configuration information to a terminal.

In this embodiment, the PRACH repetition is a repetition transmission performed during each PRACH initial transmission or retransmission, and PRACH repetition occurs only before end of a random access response window (RAR window). The network-side device configures resources for PRACH repetition transmission for the terminal, and the PRACH repetition resource is a PRACH resource used for sending a PRACH repetition. A PRACH resource not supporting PRACH repetition is a PRACH resource used for sending PRACH without repetition. The PRACH resource may be a PRACH time-frequency resource and/or PRACH sequence.

The resource configuration information may include one or more resource configuration types, and the resource configuration type is used to indicate a resource configuration mode for PRACH repetition. After receiving the resource configuration information, the terminal may select a to-be-applied target resource configuration type from one or more resource configuration types, and determine, based on indication of the target resource configuration type, a RO used for PRACH repetition transmission.

In this embodiment of this application, the network-side device configures, for the terminal, resource configuration information for PRACH repetition transmission, where the resource configuration information includes one or more resource configuration types, and the terminal can determine, based on a selected resource configuration type, a RO used for PRACH repetition transmission, and perform PRACH repetition transmission on the RO. This embodiment provides flexible PRACH repetition resource configuration, which can reduce signaling overheads used for configuring additional PRACH resources, shorten a time required for completing all PRACH repetitions, and reduce the random access delay.

Optionally, the resource configuration type includes at least one of the following:
(1) All ROs for PRACH non-repetition transmission are used for the PRACH repetition transmission.

The PRACH non-repetition transmission is a PRACH transmission without PRACH repetition, and the PRACH non-repetition transmission includes PRACH non-repetition transmissions with one or more characteristics, such as PRACH transmissions corresponding to different network slices, a PRACH transmission corresponding to small data transmission, and different PRACH transmissions corresponding to different UEs.

In the resource configuration type (1), it is indicated that the PRACH repetition transmission uses all ROs for PRACH non-repetition transmission, that is, the PRACH repetition transmission and one or more types of PRACH non-repetition transmissions use common configured ROs. The common configured RO is a RO that may be used for both PRACH repetition transmission or may be used for PRACH non-repetition transmission, that is, all ROs used for sending PRACH repetition share (share) all ROs of one or more types of PRACH non-repetition transmission.

If the terminal determines to use a RO indicated in the type (1) for PRACH repetition transmission, the terminal performs PRACH repetition transmission by using a RO configured for PRACH non-repetition transmission. This resource configuration type does not require additional PRACH configuration signaling to separately configure a PRACH time-frequency resource for PRACH repetition transmission. The following is described by using specific examples:

### (2) Part of ROs for PRACH non-repetition transmission are used for the PRACH repetition transmission.

The resource configuration type (2) indicates that PRACH repetition transmission uses part of ROs for the PRACH non-repetition transmission. That is, the PRACH repetition transmission and one or more types of PRACH non-repetition transmissions use part of the common configured ROs; to be specific, a RO subset for one specific type (or multiple types) of non-repetitive PRACH transmission is shared by the PRACH repetition transmission.

In this embodiment, additional PRACH configuration signaling is not required for separately configuring a PRACH time-frequency resource for PRACH repetition transmission, and some ROs may be further allowed to be used only for PRACH transmission without repetition, which can reduce impact of PRACH repetition characteristics on conventional PRACH transmission without PRACH repetition.

(3) An independently configured first RO is used for the PRACH repetition transmission.

In the resource configuration type (3), the PRACH non-repetition transmission includes PRACH non-repetition transmissions with one or more characteristics, and the resource configuration type (3) indicates that the PRACH repetition transmission uses an independently configured RO, that is, all PRACH repetitions use additionally configured ROs and do not share ROs used for PRACH transmissions without repetition.

Optionally, the resource configuration type may alternatively be a combination of the foregoing resource configuration type (1) and resource configuration type (3), that is, the PRACH repetition transmission uses all ROs for PRACH non-repetition transmission, and the PRACH repetition transmission also has the first RO independently configured. To be specific, PRACH transmissions with repetition share all ROs used for sending PRACH transmissions without repetition, and additional ROs are also separately configured for remaining PRACH repetition transmissions.

In this embodiment, on the basis of sharing a RO for sending PRACH non-repetition transmission, additionally configured ROs are introduced and are specially used for sending PRACH repetition, so that a plurality of PRACH repetition transmissions may be completed in a short time, thus reducing a random access delay and also ensuring reliability of PRACH transmission through the PRACH repetition itself. Especially in a case that the PRACH configuration period is relatively long and the density of ROs configured in each period is relatively low, such additionally configured RO specially used for PRACH repetition is particularly important.

Optionally, the resource configuration type may alternatively be a combination of the foregoing resource configuration type (2) and resource configuration type (3), that is, the PRACH repetition transmission uses part of ROs for PRACH non-repetition transmission, and the PRACH repetition transmission also has the first RO independently configured. That is, the PRACH transmission with repetition shares part of ROs used for sending PRACH transmissions without repetition. In this case, there are also remaining ROs used only for sending PRACH without repetition, and an additional RO is separately configured for remaining PRACH repetition transmissions.

This embodiment can reduce a random access delay with PRACH repetition, and can reduce impact of introduced PRACH repetition on PRACH non-repetition.

Optionally, the method further includes: configuring the first RO based on the first information. In this embodiment, the first information is information related to the first RO. The first information may be configured and sent by the network-side device or may be a predefined rule; or, part of the first information is configured by the network-side device, and the rest part of information is a predefined rule. Optionally, the method further includes: sending the first information to the terminal. In a case that the first information (or part of the information) is configured by the network-side device, the network-side device sends the first information (or part of the information) to the terminal.

Optionally, the configuring the first RO based on the first information includes:
configuring, based on the first information, the first RO relative to a common RO;
   or
configuring, based on the first information, the first RO relative to a PRACH slot in which a common RO is located.

In this embodiment, the first RO may be a RO configured relative to the common RO, where the RO configured relative to the common RO is a RO that may be used for PRACH repetition or may be used for PRACH non-repetition transmission. Optionally, when there are a plurality of common configured ROs, they may be configured relative to the 1st common RO or relative to the last common RO; or they may be configured relative to a start time of the common RO or relative to an end time of the common RO. For example, one or more ROs are additionally configured separately relative to a common configured RO (that is, a shared RO) used for the 1st PRACH repetition transmission.

The first RO may also be a RO configured relative to the PRACH slot in which the common RO is located, for example, being relative to a group (including one or more ROs) of common configured ROs (that is, shared ROs) in the PRACH slot, or being a group (one or more) of separate ROs configured relative to a PRACH slot including a group (including one or more ROs) of common configured ROs (that is, shared ROs).

Optionally, the first information includes at least one of the following:
1) the number of PRACH repetition transmissions; for example, configuring a group of PRACH repetition factors;
2) A symbol-level offset relative to an end moment of a common RO (that is, a common configured RO that may be used for PRACH repetition transmission or may be used for PRACH non-repetition transmission), where the common RO is a common configured RO used for PRACH repetition transmission and PRACH non-repetition transmission.
3) A symbol-level offset relative to a start moment of the common RO.
4) Symbol allocation in a slot in which the first RO is located is the same as symbol allocation in a slot in which the common RO is located, where such information may be a predefined rule, that is, it is defined that symbol allocation in a slot in which an additionally configured RO is located is the same as symbol allocation in a slot in which an associated common RO is located.
5) Indication information for indicating the symbol allocation in the slot in which the first RO is located, where the indication information is indicated by a PRACH configuration table of the common RO; that is, symbol allocation in a slot in which an additionally configured RO is located may be indicated by one column (or row) or multiple columns (or rows) in a PRACH configuration table of an associated common RO.
   For example, one or more indexes are additionally indicated in a system message to correspond to one or more rows in the RO resource configuration table, and one column is added to the table to indicate that the RO is located in the 1st symbol of the slot. Optionally, the table in this embodiment may be a random access configurations (Random access configurations) table in a related protocol.
6) A symbol-level offset relative to an end moment of the slot in which the first RO is located.
7) A symbol-level offset relative to a start moment of the slot in which the first RO is located.
8) A slot-level offset relative to an end moment of the slot in which the common RO is located, that is, one slot-level offset from the end time point of the slot in which the common RO is located.
9) A slot-level offset relative to a start moment of the slot in which the common RO is located, that is, one slot-level offset from the start time point of the slot in which the common RO is located.
10) A slot-level offset relative to an end moment of a PRACH slot in which the common RO is located.
11)A slot-level offset relative to a start moment of the PRACH slot in which the common RO is located.
12) A frequency offset relative to a first resource block (Resource Block, RB) of an active (active) uplink bandwidth part (Uplink Bandwidth Part, UL BWP), where, for example, the offset is used to determine the first RB of the first RO in frequency domain in an additionally configured group of ROs.
13) The number of frequency domain multiplexing ROs. The number of PRACH repetitions can be obtained based on this parameter. For example, this parameter may be configured when the number of PRACH repetitions is not configured, or may be configured along with the number of PRACH repetitions.
14) The number of time domain multiplexing ROs. The number of PRACH repetitions can be obtained based on this parameter. For example, this parameter may be configured when the number of PRACH repetitions is not configured, or may be configured along with the number of PRACH repetitions.
15) A time interval between a plurality of time domain multiplexing ROs, where the time interval may be a guard band (guard band), which can prevent interference between ROs, and is, for example, one or more slots.
16) A frequency spacing between a plurality of frequency domain multiplexing ROs; for example, one or more physical resource blocks (Physical Resource Block, PRB).
17) A configuration parameter for a sequence (preamble) corresponding to the first RO.
18) A mapping relationship between a common RO in a PRACH slot and the first RO, that is, a mapping relationship between the common ROs in the PRACH slot (which may be all ROs in the PRACH slot or a subset of the ROs) and a group of ROs (that is, the first ROs) additionally configured relative to the PRACH slot and specially used for PRACH repetition transmission.

In this embodiment, when the network-side device configures the first RO relative to a common RO, for example, when one or more ROs (that is, the first RO) are additionally configured separately relative to a common RO (shared RO) used for the 1st PRACH repetition transmission, the configuration may be made based on one or more of 1) to 7) and 12) to 17) in the first information; When the network-side device configures the first RO relative to the PRACH slot in which the common RO is located, the configuration may be made based on one or more of 1) to 5) and 8) to 18) in the first information.

It should be noted that in this embodiment of this application, the PRACH slot is different from the slot, the slot is a slot defined based on a subcarrier spacing, the PRACH slot is a slot defined for PRACH, and one PRACH slot may include a plurality of slots.

Optionally, the PRACH slot includes at least one common RO group, and each common RO group corresponds to one first RO group. In this embodiment, both the common RO and the first RO are configured in groups, the PRACH slot may include one or more common RO groups, and each group of common ROs corresponds to each first RO group independently configured.

Optionally, the number of PRACH repetition transmissions of different first RO groups is independently configured. In this embodiment, the number of PRACH repetition transmissions corresponding to each first RO group may be independently configured, for example, different additional RO groups (that is, the first RO group) may be configured with different quantities of PRACH repetition transmissions.

Optionally, the method further includes: sending RRC signaling to the terminal, where the RRC signaling indicates a target resource configuration type corresponding to the terminal.

In this embodiment, a plurality of resource configuration types for PRACH repetition transmission are supported, and a to-be-used resource configuration type may be configured by the network-side device or implicitly determined based on signaling provided for PRACH repetition resource configuration. The configured resource configuration information may include one or more resource configuration types, and each resource configuration type indicates a different RO configuration mode. After obtaining the resource configuration information, the terminal selects a target resource configuration type to be applied, and determines a RO for PRACH repetition transmission based on a RO configuration mode indicated by the selected target resource configuration type. Specifically, the network-side device may indicate, through RRC signaling, which resource configuration type (for example, one of the resource configuration types provided in all the above embodiments) being supported for PRACH repetition transmission. Optionally, which resource configuration type being used by the terminal may depend on whether corresponding signaling (that is, the first information) is provided by the network-side device. For example, when no separate parameter/IE (that is, the first information) is provided for separately configuring the first RO for PRACH repetition, PRACH repetition transmission can use only a RO not for repetition.

Optionally, the method further includes:
in a first-type random access procedure, receiving PRACH repetition transmission from the terminal;
   and/or
in a second-type random access procedure, receiving PRACH repetition transmission from the terminal.

In this embodiment, the first-type random access procedure may be Type-1 random access procedure, and the second-type random access procedure may be Type-2 random access procedure. At least one of the first-type random access procedure and the second-type random access procedure is used for PRACH repetition transmission, and the network-side device receives the PRACH repetition transmission at a corresponding RO.

Optionally, the method further includes:
in a first-type random access procedure, receiving PRACH non-repetition transmission from the terminal by using a common RO;
   and/or
in a second-type random access procedure, receiving PRACH non-repetition transmission from the terminal by using a common RO, where
the common RO is a common configured RO used by the PRACH repetition transmission and PRACH non-repetition transmission.

In this embodiment, the first-type random access procedure may be Type-1 random access procedure, and the second-type random access procedure may be Type-2 random access procedure. A common RO in at least one random access procedure in the first-type random access procedure and the second-type random access procedure is used for PRACH repetition transmission, and the network-side device receives the PRACH non-repetition transmission at a corresponding RO, where the common RO is a common configured RO that may be used for PRACH repetition transmission or may be used for PRACH non-repetition transmission.

In this embodiment of this application, the network-side device configures the resource configuration information for PRACH repetition transmission for the terminal, and the terminal determines a to-be-used resource configuration type based on the resource configuration information, so as to determine the RO used for PRACH repetition transmission and perform PRACH repetition transmission on the RO. This embodiment provides flexible allocation of PRACH repetition resources. When existing PRACH resources are sparse, additional allocation of PRACH occasion may be considered for PRACH repetition transmission, and when configured PRACH resources are dense, it may be considered to share the existing PRACH resources for PRACH repetition transmission. The 1st PRACH repetition is sent on a common RO, and ROs for remaining PRACH repetition transmission may be additionally configured relative to the first PRACH repetition. A mapping rule from the 1st RO to the rest ROs is introduced, which largely simulates the mapping from RO to MsgA PUSCH occasion in the 2-step RACH procedure, thereby reducing complexity of implementation and also reducing signaling overheads used for configuring additional PRACH resources. Additionally configuring PRACH resources also shortens a time required for completing all repetitions to a greater extent and reduces the random access delay.

In the PRACH repetition transmission method provided in the embodiments of this application, the execution subject may be a PRACH repetition transmission apparatus. In the embodiments of this application, the PRACH repetition transmission method being performed by the PRACH repetition transmission apparatus is used as an example to describe the PRACH repetition transmission apparatus provided in the embodiments of this application.

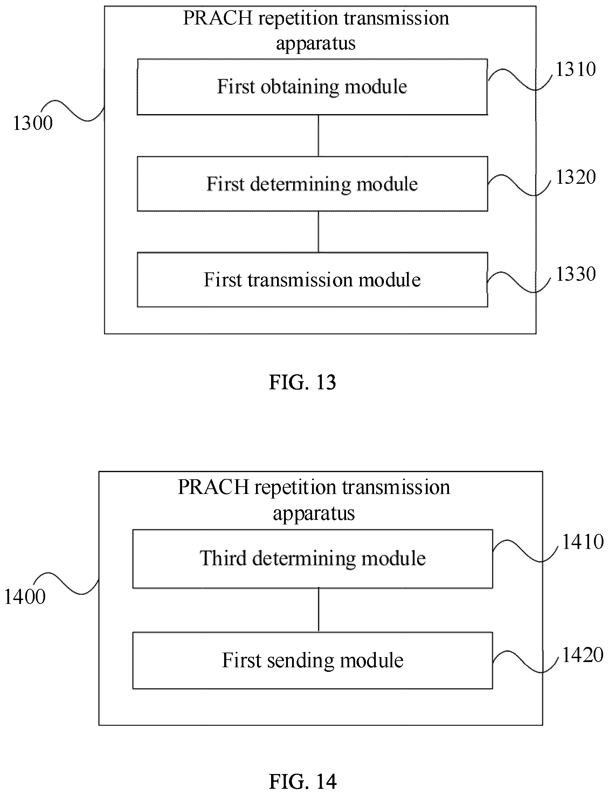

As shown in FIG. 13, an embodiment of this application further provides a PRACH repetition transmission apparatus 1300, applied to a terminal and including:
a first obtaining module 1310, configured to obtain resource configuration information for physical random access channel PRACH repetition transmission, where the resource configuration information includes a resource configuration type for the PRACH repetition transmission;
a first determining module 1320, configured to determine, based on the resource configuration type, a random access channel occasion RO used for the PRACH repetition transmission; and
a first transmission module 1330, configured to perform PRACH repetition transmission based on the RO.

Optionally, the resource configuration type includes at least one of the following:
all ROs for PRACH non-repetition transmission are used for the PRACH repetition transmission;
part of ROs for PRACH non-repetition transmission are used for the PRACH repetition transmission; and
an independently configured first RO is used for the PRACH repetition transmission; where
the PRACH non-repetition transmission includes PRACH non-repetition transmissions with one or more characteristics.

Optionally, the apparatus further includes:
a second obtaining module, configured to obtain first information corresponding to the first RO; and
a second determining module, configured to determine the first RO based on the first information.

Optionally, the first information includes at least one of the following:
the number of PRACH repetition transmissions;
a symbol-level offset relative to an end moment of a common RO;
a symbol-level offset relative to a start moment of the common RO;
symbol allocation in a slot in which the first RO is located is the same as symbol allocation in a slot in which the common RO is located;
indication information for indicating the symbol allocation in the slot in which the first RO is located, where the indication information is indicated by a PRACH configuration table of the common RO;
a symbol-level offset relative to an end moment of the slot in which the first RO is located;
a symbol-level offset relative to a start moment of the slot in which the first RO is located;
a slot-level offset relative to an end moment of the slot in which the common RO is located;
a slot-level offset relative to a start moment of the slot in which the common RO is located;
a slot-level offset relative to an end moment of a PRACH slot in which the common RO is located;
a slot-level offset relative to a start moment of the PRACH slot in which the common RO is located;
a frequency offset relative to a first resource block of an active uplink bandwidth part;
the number of frequency domain multiplexing ROs;
the number of time domain multiplexing ROs;
a time interval between a plurality of time domain multiplexing ROs;
a frequency spacing between a plurality of frequency domain multiplexing ROs;
a configuration parameter for a preamble corresponding to the first RO; and
a mapping relationship between a common RO in a PRACH slot and the first RO; where
the common RO is a common configured RO used by the PRACH repetition transmission and PRACH non-repetition transmission.

Optionally, the first RO is a RO configured relative to the common RO; or
the first RO is a RO configured relative to the PRACH slot in which the common RO is located.

Optionally, the apparatus further includes:
a resource mapping module, configured to perform resource mapping based on the mapping relationship between the common RO in the PRACH slot and the first RO.

Optionally, the resource mapping module is specifically configured to:
perform mapping on ROs in the PRACH slot and the first RO according to a first defined order; where
a mapping ratio of the ROs in the PRACH slot to the first RO is related to the number of PRACH repetition transmissions and/or the number of common ROs.

Optionally, the common RO in the PRACH slot for resource mapping is a valid common RO; and
the first RO for resource mapping is a valid RO configured relative to the PRACH slot.

Optionally, the PRACH slot includes at least one common RO group, and each common RO group corresponds to one first RO group.

Optionally, the number of PRACH repetition transmissions of different first RO groups is independently configured.

Optionally, the first determining module includes:
a first determining unit, configured to determine a target resource configuration type corresponding to the terminal from at least one resource configuration type; and
a second determining unit, configured to determine the RO, indicated in the target resource configuration type, for the PRACH repetition transmission.

Optionally, the first determining unit is specifically configured to:
receive radio resource control RRC signaling sent by a network-side device, where the RRC signaling indicates the target resource configuration type corresponding to the terminal;
   or
determine the target resource configuration type based on whether the terminal receives the first information corresponding to the first RO.

Optionally, the first transmission module is specifically configured to:
in a first-type random access procedure, perform the PRACH repetition transmission;
   and/or
in a second-type random access procedure, perform the PRACH repetition transmission.

Optionally, the device further includes a second transmission module; where the second transmission module is configured to:
in a first-type random access procedure, perform the PRACH non-repetition transmission by using a common RO;
   and/or
in a second-type random access procedure, perform the PRACH non-repetition transmission by using a common RO; where
the common RO is a common configured RO used by the PRACH repetition transmission and PRACH non-repetition transmission.

In this embodiment of this application, the terminal obtains the resource configuration information for PRACH repetition transmission, determines a to-be-used resource configuration type based on the resource configuration information, determines the RO used for PRACH repetition transmission, and then performs PRACH repetition transmission on the RO. This embodiment provides flexible PRACH repetition resource configuration, which can reduce signaling overheads used for configuring additional PRACH resources, shorten a time required for completing all PRACH repetitions, and reduce the random access delay.

It should be noted that the PRACH repetition transmission apparatus provided in this embodiment of this application can implement the processes implemented in the method embodiment in FIG. 4 to FIG. 11, with the same technical effects achieved. To avoid repetition, details are not described herein again.

As shown in FIG. 14, an embodiment of this application further provides a PRACH repetition transmission apparatus 1400, applied to a network-side device and including:
a third determining module 1410, configured to determine resource configuration information for PRACH repetition transmission, where the resource configuration information includes a resource configuration type for the PRACH repetition transmission; and
a first sending module 1420, configured to send the resource configuration information to a terminal.

Optionally, the resource configuration type includes at least one of the following:
all ROs for PRACH non-repetition transmission are used for the PRACH repetition transmission;
part of ROs for PRACH non-repetition transmission are used for the PRACH repetition transmission; and
an independently configured first RO is used for the PRACH repetition transmission; where
the PRACH non-repetition transmission includes PRACH non-repetition transmissions with one or more characteristics.

Optionally, the apparatus further includes:
a configuration module, configured to configure the first RO based on the first information.

Optionally, the apparatus further includes:
a second sending module, configured to send the first information to the terminal.

Optionally, the configuration module is specifically configured to:
configuring, based on the first information, the first RO relative to a common RO;
   or
configuring, based on the first information, the first RO relative to a PRACH slot in which a common RO is located.

Optionally, the first information includes at least one of the following:
the number of PRACH repetition transmissions;
a symbol-level offset relative to an end moment of a common RO;
a symbol-level offset relative to a start moment of the common RO;
symbol allocation in a slot in which the first RO is located is the same as symbol allocation in a slot in which the common RO is located;
indication information for indicating the symbol allocation in the slot in which the first RO is located, where the indication information is indicated by a PRACH configuration table of the common RO;
a symbol-level offset relative to an end moment of the slot in which the first RO is located;
a symbol-level offset relative to a start moment of the slot in which the first RO is located;
a slot-level offset relative to an end moment of the slot in which the common RO is located;
a slot-level offset relative to a start moment of the slot in which the common RO is located;
a slot-level offset relative to an end moment of a PRACH slot in which the common RO is located;
a slot-level offset relative to a start moment of the PRACH slot in which the common RO is located;
a frequency offset relative to a first resource block of an active uplink bandwidth part;
the number of frequency domain multiplexing ROs;
the number of time domain multiplexing ROs;
a time interval between a plurality of time domain multiplexing ROs;
a frequency spacing between a plurality of frequency domain multiplexing ROs;
a configuration parameter for a preamble corresponding to the first RO; and
a mapping relationship between a common RO in a PRACH slot and the first RO; where
the common RO is a common configured RO used by the PRACH repetition transmission and PRACH non-repetition transmission.

Optionally, the PRACH slot includes at least one common RO group, and each common RO group corresponds to one first RO group.

Optionally, the number of PRACH repetition transmissions of different first RO groups is independently configured.

Optionally, the apparatus further includes:
a third sending module, configured to send RRC signaling to the terminal, where the RRC signaling indicates a target resource configuration type corresponding to the terminal.

Optionally, the apparatus further includes a first receiving module, and the first receiving module is specifically configured to:
in a first-type random access procedure, receive PRACH repetition transmission from the terminal;
   and/or
in a second-type random access procedure, receive PRACH repetition transmission from the terminal.

Optionally, the apparatus further includes a second receiving module, and the second receiving module is specifically configured to:
in a first-type random access procedure, receive PRACH non-repetition transmission from the terminal by using a common RO;
   and/or
in a second-type random access procedure, receive PRACH non-repetition transmission from the terminal by using a common RO, where
the common RO is a common configured RO used by the PRACH repetition transmission and PRACH non-repetition transmission.

In this embodiment of this application, the network-side device configures, for the terminal, resource configuration information for PRACH repetition transmission, where the resource configuration information includes one or more resource configuration types, and the terminal can determine, based on a selected resource configuration type, a RO used for PRACH repetition transmission, and perform PRACH repetition transmission on the RO. This embodiment provides flexible PRACH repetition resource configuration, which can reduce signaling overheads used for configuring additional PRACH resources, shorten a time required for completing all PRACH repetitions, and reduce the random access delay.

It should be noted that the PRACH repetition transmission apparatus provided in this embodiment of this application can implement the processes implemented in the method embodiment in FIG. 12, with the same technical effects achieved. To avoid repetition, details are not described herein again.

The PRACH repetition transmission apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

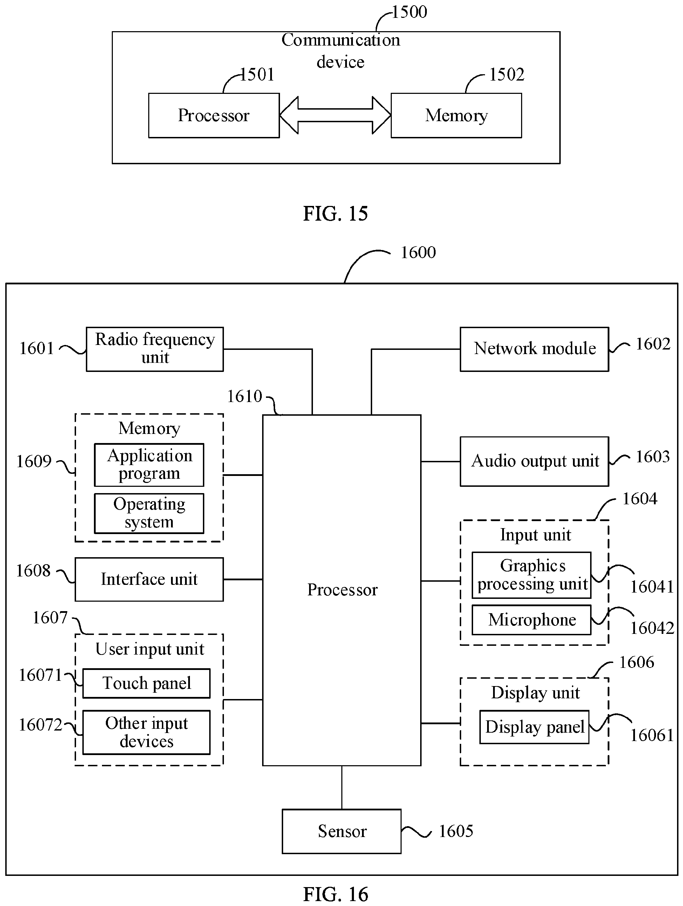

Optionally, as shown in FIG. 15, an embodiment of this application further provides a communication device 1500, including a processor 1501, a memory 1502, and a program or instructions stored in the memory 1502 and capable of running on the processor 1501. For example, when the communication device 1500 is a terminal and when the program or instructions are executed by the processor 1501, the steps of the foregoing embodiments of the PRACH repetition transmission method applied to the terminal are implemented, with the same technical effects achieved. When the communication device 1500 is a network-side device and when the program or instructions are executed by the processor 1501, the steps of the foregoing embodiments of the PRACH repetition transmission method applied to the network-side device are implemented, with the same technical effects achieved. To avoid repetition, details are not described herein again.

An embodiment of this application further provides a terminal, including a processor and a communication interface, where the processor is configured to obtain resource configuration information for PRACH repetition transmission, where the resource configuration information includes a resource configuration type for the PRACH repetition transmission; and determine, based on the resource configuration type, a random access channel occasion RO used for the PRACH repetition transmission. The communication interface is configured to perform PRACH repetition transmission based on the RO. The terminal embodiments correspond to the foregoing terminal-side method embodiments, and the implementation processes and implementations of the foregoing method embodiments can be applied to the terminal embodiments, with the same technical effects achieved. Specifically, FIG. 16 is a schematic diagram of a hardware structure of a terminal for implementing the embodiments of this application.

The terminal 1600 includes but is not limited to at least part of components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

Persons skilled in the art can understand that the terminal 1600 may further include a power supply (for example, a battery) supplying power to the components, and the power supply may be logically connected to the processor 1610 through a power management system. In this way, functions such as charge management, discharge management, and power consumption management are implemented by using the power management system. The structure of the terminal shown in FIG. 16 does not constitute any limitation on the terminal. The terminal may include more or fewer components than shown in the figure, or a combination of some components, or the components disposed differently. Details are not described herein again.

It can be understood that in this embodiment of this application, the input unit 1604 may include a graphics processing unit (Graphics Processing Unit, GPU) 16041 and a microphone 16042. The graphics processing unit 16041 processes image data of a still picture or video obtained by an image capture apparatus (such as a camera) in a video capture mode or an image capture mode. The display unit 1606 may include a display panel 16061, and the display panel 16061 may be configured in a form of a liquid crystal display, an organic light-emitting diode, and the like. The user input unit 1607 may include at least one of a touch panel 16071 and other input devices 16072. The touch panel 16071 is also referred to as a touchscreen. The touch panel 16071 may include two parts: a touch detection apparatus and a touch controller. The other input devices 16072 may include but are not limited to a physical keyboard, a function key (such as a volume control key or a power on/off key), a trackball, a mouse, a joystick, and the like. Details are not described herein.

In this embodiment of this application, the radio frequency unit 1601 receives downlink data from a network-side device, and then sends the downlink data to the processor 1610 for processing. In addition, the radio frequency unit 1601 may send uplink data to the network-side device. Generally, the radio frequency unit 1601 includes but is not limited to an antenna, an amplifier, a transceiver, a coupler, a low noise amplifier, a duplexer, and the like.

The memory 1609 may be configured to store software programs or instructions and various data. The memory 1609 may include a first storage area for storing a program or instructions and a second storage area for storing data. The first storage area may store an operating system, an application program or instruction required by at least one function (for example, a sound playback function or an image playback function), and the like. In addition, the memory 1609 may include a volatile memory or a non-volatile memory, or the memory 1609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1609 in the embodiments of this application includes but is not limited to these and any other suitable types of memories.

The processor 1610 may include one or more processing units. Optionally, an application processor and a modem processor may be integrated in the processor 1610. The application processor primarily processes operations involving an operating system, user interfaces, application programs, and the like. The modem processor primarily processes radio communication signals, for example, being a baseband processor. It can be understood that the modem processor may alternatively be not integrated in the processor 1610.

The processor 1610 is configured to obtain resource configuration information for physical random access channel PRACH repetition transmission, where the resource configuration information includes a resource configuration type for the PRACH repetition transmission; and determine, based on the resource configuration type, a random access channel occasion RO used for the PRACH repetition transmission.

The radio frequency unit 1601 is configured to perform PRACH repetition transmission based on the RO.

In this embodiment of this application, the terminal obtains the resource configuration information for PRACH repetition transmission, determines a to-be-used resource configuration type based on the resource configuration information, determines the RO used for PRACH repetition transmission, and then performs PRACH repetition transmission on the RO. This embodiment provides flexible PRACH repetition resource configuration, which can reduce signaling overheads used for configuring additional PRACH resources, shorten a time required for completing all PRACH repetitions, and reduce the random access delay.

Optionally, the resource configuration type includes at least one of the following:
all ROs for PRACH non-repetition transmission are used for the PRACH repetition transmission;
part of ROs for PRACH non-repetition transmission are used for the PRACH repetition transmission; and
an independently configured first RO is used for the PRACH repetition transmission; where
the PRACH non-repetition transmission includes PRACH non-repetition transmissions with one or more characteristics.

Optionally, the radio frequency unit 1601 is further configured to: obtain first information corresponding to the first RO.

The processor 1610 is configured to determine the first RO based on the first information.

Optionally, the first information includes at least one of the following:
the number of PRACH repetition transmissions;
a symbol-level offset relative to an end moment of a common RO;
a symbol-level offset relative to a start moment of the common RO;
symbol allocation in a slot in which the first RO is located is the same as symbol allocation in a slot in which the common RO is located;
indication information for indicating the symbol allocation in the slot in which the first RO is located, where the indication information is indicated by a PRACH configuration table of the common RO;
a symbol-level offset relative to an end moment of the slot in which the first RO is located;
a symbol-level offset relative to a start moment of the slot in which the first RO is located;
a slot-level offset relative to an end moment of the slot in which the common RO is located;
a slot-level offset relative to a start moment of the slot in which the common RO is located;
a slot-level offset relative to an end moment of a PRACH slot in which the common RO is located;
a slot-level offset relative to a start moment of the PRACH slot in which the common RO is located;
a frequency offset relative to a first resource block of an active uplink bandwidth part;
the number of frequency domain multiplexing ROs;
the number of time domain multiplexing ROs;
a time interval between a plurality of time domain multiplexing ROs;
a frequency spacing between a plurality of frequency domain multiplexing ROs;
a configuration parameter for a preamble corresponding to the first RO; and
a mapping relationship between a common RO in a PRACH slot and the first RO; where
the common RO is a common configured RO used by the PRACH repetition transmission and PRACH non-repetition transmission.

Optionally, the first RO is a RO configured relative to the common RO; or
the first RO is a RO configured relative to the PRACH slot in which the common RO is located.

Optionally, the processor 1610 is further configured to perform resource mapping based on the mapping relationship between the common RO in the PRACH slot and the first RO.

Optionally, the processor 1610 performs resource mapping based on the mapping relationship between the common RO in the PRACH slot and the first RO, and is specifically configured to perform mapping on ROs in the PRACH slot and the first RO according to a first defined order; where
a mapping ratio of the ROs in the PRACH slot to the first RO is related to the number of PRACH repetition transmissions and/or the number of common ROs.

Optionally, the common RO in the PRACH slot for resource mapping is a valid common RO; and
the first RO for resource mapping is a valid RO configured relative to the PRACH slot.

Optionally, the PRACH slot includes at least one common RO group, and each common RO group corresponds to one first RO group.

Optionally, the number of PRACH repetition transmissions of different first RO groups is independently configured.

Optionally, the processor 1610 determines, based on the resource configuration type, the RO for PRACH repetition transmission, and is specifically configured to:
determine a target resource configuration type corresponding to the terminal from at least one resource configuration type; and
determine the RO, indicated in the target resource configuration type, for the PRACH repetition transmission.

Optionally, the processor 1610 determines the target resource configuration type corresponding to the terminal from at least one resource configuration type, and is specifically configured to:
receive radio resource control RRC signaling sent by a network-side device, where the RRC signaling indicates the target resource configuration type corresponding to the terminal;
   or
determine the target resource configuration type based on whether the terminal receives the first information corresponding to the first RO.

Optionally, the radio frequency unit 1601 is specifically configured to:
in a first-type random access procedure, perform the PRACH repetition transmission;
   and/or
in a second-type random access procedure, perform the PRACH repetition transmission.

Optionally, the radio frequency unit 1601 is further configured to:
in a first-type random access procedure, perform the PRACH non-repetition transmission by using a common RO;
   and/or
in a second-type random access procedure, perform the PRACH non-repetition transmission by using a common RO; where
the common RO is a common configured RO used by the PRACH repetition transmission and PRACH non-repetition transmission.

In this embodiment of this application, the terminal obtains the resource configuration information for PRACH repetition transmission, determines a to-be-used resource configuration type based on the resource configuration information, determines the RO used for PRACH repetition transmission, and then performs PRACH repetition transmission on the RO. This embodiment provides flexible allocation of PRACH repetition resources. When existing PRACH resources are sparse, additional allocation of PRACH occasion may be considered for PRACH repetition transmission, and when configured PRACH resources are dense, it may be considered to share the existing PRACH resources for PRACH repetition transmission. The 1st PRACH repetition is sent on a common RO, and ROs for remaining PRACH repetition transmission may be additionally configured relative to the first PRACH repetition. A mapping rule from the 1st RO to the rest ROs is introduced, which largely simulates the mapping from RO to MsgA PUSCH occasion in the 2-step RACH procedure, thereby reducing complexity of implementation and also reducing signaling overheads used for configuring additional PRACH resources. Additionally configuring PRACH resources also shortens a time required for completing all repetitions to a greater extent and reduces the random access delay.

It should be noted that the terminal in this embodiment of this application can implement all the steps implemented in the foregoing method embodiment applied to the terminal, with the same technical effects achieved. Details are not repeated herein.

An embodiment of this application further provides a network-side device, including a processor and a communication interface. The processor is configured to determine resource configuration information for PRACH repetition transmission, where the resource configuration information includes a resource configuration type for the PRACH repetition transmission; and the communication interface is configured to send the resource configuration information to a terminal. The network-side device embodiments correspond to the foregoing network-side device method embodiments, and the implementation processes and implementations of the foregoing method embodiments can be applied to the network-side device embodiments, with the same technical effects achieved.

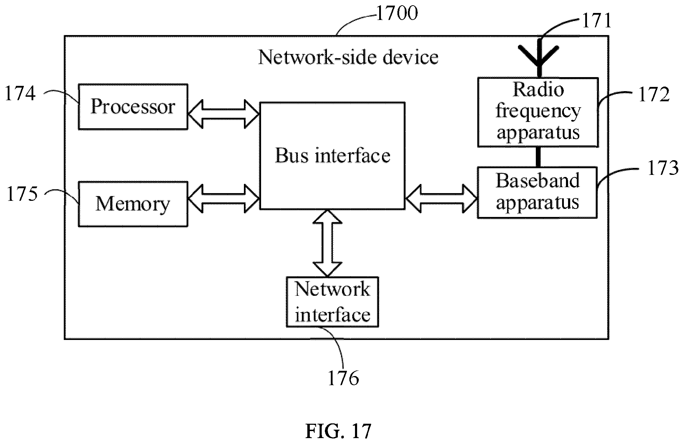

Specifically, an embodiment of this application further provides a network-side device. As shown in FIG. 17, the network-side device 1700 includes an antenna 171, a radio frequency apparatus 172, a baseband apparatus 173, a processor 174, and a memory 175. The antenna 171 is connected to the radio frequency apparatus 172. In an uplink direction, the radio frequency apparatus 172 receives information by using the antenna 171, and sends the received information to the baseband apparatus 173 for processing. In a downlink direction, the baseband apparatus 173 processes to-be-sent information, and sends the information to the radio frequency apparatus 172; and the radio frequency apparatus 172 processes the received information and then sends the information out by using the antenna 171.

The method executed by the network-side device in the foregoing embodiments can be implemented in the baseband apparatus 173, and the baseband apparatus 173 includes a baseband processor.

The baseband apparatus 173 may include, for example, at least one baseband board, where a plurality of chips are disposed on the baseband board. As shown in FIG. 17, one of the chips is, for example, a baseband processor, and is connected to the memory 175 through the bus interface, to invoke a program in the memory 175 to perform the operations of the network device shown in the foregoing method embodiments.

The network-side device may further include a network interface 176, where the interface is, for example, a common public radio interface (common public radio interface, CPRI).

Specifically, the network-side device 1700 in this embodiment of the present invention further includes: instructions or a program stored in the memory 175 and capable of running on the processor 174. The processor 174 invokes the instructions or program in the memory 175 to execute the method executed by the modules shown in FIG. 14, with the same technical effects achieved. To avoid repetition, details are not repeated herein.

An embodiment of this application further provides a readable storage medium, where a program or instructions are stored in the readable storage medium. When the program or instructions are executed by a processor, the processes of the foregoing embodiment of the PRACH repetition transmission method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing PRACH repetition transmission method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing PRACH repetition transmission method embodiments, with the same technical effects achieved. To avoid repetition, details are not repeated herein.

An embodiment of this application further provides a PRACH repetition transmission system, including a terminal and a network-side device, where the terminal can be configured to execute the processes of the foregoing embodiments of the PRACH repetition transmission method applied to the terminal, and the network-side device can be configured to execute the steps of foregoing embodiments of the PRACH repetition transmission method applied to the network-side device side.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A PRACH repetition transmission method, comprising:
obtaining, by a terminal, resource configuration information for physical random access channel PRACH repetition transmission, wherein the resource configuration information comprises a resource configuration type for the PRACH repetition transmission;
determining, by the terminal based on the resource configuration type, a random access channel occasion RO used for the PRACH repetition transmission; and
performing, by the terminal, PRACH repetition transmission based on the RO.

2. The method according to claim 1, wherein the resource configuration type comprises at least one of the following:
all ROs for PRACH non-repetition transmission are used for the PRACH repetition transmission;
part of ROs for PRACH non-repetition transmission are used for the PRACH repetition transmission; and
an independently configured first RO is used for the PRACH repetition transmission; wherein
the PRACH non-repetition transmission comprises PRACH non-repetition transmissions with one or more characteristics.

3. The method according to claim 2, wherein the method further comprises:
obtaining first information corresponding to the first RO; and
determining the first RO based on the first information.

4. The method according to claim 3, wherein the first information comprises at least one of the following:
the number of PRACH repetition transmissions;
a symbol-level offset relative to an end moment of a common RO;
a symbol-level offset relative to a start moment of the common RO;
symbol allocation in a slot in which the first RO is located is the same as symbol allocation in a slot in which the common RO is located;
indication information for indicating the symbol allocation in the slot in which the first RO is located, wherein the indication information is indicated by a PRACH configuration table of the common RO;
a symbol-level offset relative to an end moment of the slot in which the first RO is located;
a symbol-level offset relative to a start moment of the slot in which the first RO is located;
a slot-level offset relative to an end moment of the slot in which the common RO is located;
a slot-level offset relative to a start moment of the slot in which the common RO is located;
a slot-level offset relative to an end moment of a PRACH slot in which the common RO is located;
a slot-level offset relative to a start moment of the PRACH slot in which the common RO is located;
a frequency offset relative to a first resource block of an active uplink bandwidth part;
the number of frequency domain multiplexing ROs;
the number of time domain multiplexing ROs;
a time interval between a plurality of time domain multiplexing ROs;
a frequency spacing between a plurality of frequency domain multiplexing ROs;
a configuration parameter for a preamble corresponding to the first RO; and
a mapping relationship between a common RO in a PRACH slot and the first RO; wherein
the common RO is a common configured RO used by the PRACH repetition transmission and PRACH non-repetition transmission.

5. The method according to any one of claims 2 to 4, wherein the first RO is a RO configured relative to the common RO; or
the first RO is a RO configured relative to the PRACH slot in which the common RO is located.

6. The method according to claim 4, wherein the method further comprises:
performing resource mapping based on the mapping relationship between the common RO in the PRACH slot and the first RO.

7. The method according to claim 6, wherein the performing resource mapping based on the mapping relationship between the common RO in the PRACH slot and the first RO comprises:
performing mapping on ROs in the PRACH slot and the first RO according to a first defined order; wherein
a mapping ratio of the ROs in the PRACH slot to the first RO is related to the number of PRACH repetition transmissions and/or the number of common ROs.

8. The method according to claim 7, wherein the common RO in the PRACH slot for resource mapping is a valid common RO; and
the first RO for resource mapping is a valid RO configured relative to the PRACH slot.

9. The method according to claim 5, wherein the PRACH slot comprises at least one common RO group, and each common RO group corresponds to one first RO group.

10. The method according to claim 9, wherein the number of PRACH repetition transmissions of different first RO groups is independently configured.

11. The method according to claim 2, wherein the determining, based on the resource configuration type, a RO for PRACH repetition transmission comprises:
determining a target resource configuration type corresponding to the terminal from at least one resource configuration type; and
determining the RO, indicated in the target resource configuration type, for the PRACH repetition transmission.

12. The method according to claim 11, wherein the determining a target resource configuration type corresponding to the terminal from at least one resource configuration type comprises:
receiving radio resource control RRC signaling sent by a network-side device, wherein the RRC signaling indicates the target resource configuration type corresponding to the terminal;
or,
determining the target resource configuration type based on whether the terminal receives the first information corresponding to the first RO.

13. The method according to claim 1, wherein the performing PRACH repetition transmission comprises:
in a first-type random access procedure, performing the PRACH repetition transmission;
and/or
in a second-type random access procedure, performing the PRACH repetition transmission.

14. The method according to claim 2, wherein the method further comprises:
in a first-type random access procedure, performing the PRACH non-repetition transmission by using a common RO;
and/or
in a second-type random access procedure, performing the PRACH non-repetition transmission by using a common RO; wherein
the common RO is a common configured RO used by the PRACH repetition transmission and PRACH non-repetition transmission.

15. A PRACH repetition transmission method, comprising:
obtaining, by a network-side device, resource configuration information for PRACH repetition transmission, wherein the resource configuration information comprises a resource configuration type for the PRACH repetition transmission; and
sending, by the network-side device, the resource configuration information to a terminal.

16. The method according to claim 15, wherein the resource configuration type comprises at least one of the following:
all ROs for PRACH non-repetition transmission are used for the PRACH repetition transmission;
part of ROs for PRACH non-repetition transmission are used for the PRACH repetition transmission; and
an independently configured first RO is used for the PRACH repetition transmission; wherein
the PRACH non-repetition transmission comprises PRACH non-repetition transmissions with one or more characteristics.

17. The method according to claim 16, wherein the method further comprises:
configuring the first RO based on the first information.

18. The method according to claim 17, wherein the method further comprises:
sending the first information to the terminal.

19. The method according to claim 17, wherein the configuring the first RO based on the first information comprises:
configuring, based on the first information, the first RO relative to a common RO;
or
configuring, based on the first information, the first RO relative to a PRACH slot in which a common RO is located.

20. The method according to any one of claims 17 to 19, wherein the first information comprises at least one of the following:
the number of PRACH repetition transmissions;
a symbol-level offset relative to an end moment of a common RO;
a symbol-level offset relative to a start moment of the common RO;
symbol allocation in a slot in which the first RO is located is the same as symbol allocation in a slot in which the common RO is located;
indication information for indicating the symbol allocation in the slot in which the first RO is located, wherein the indication information is indicated by a PRACH configuration table of the common RO;
a symbol-level offset relative to an end moment of the slot in which the first RO is located;
a symbol-level offset relative to a start moment of the slot in which the first RO is located;
a slot-level offset relative to an end moment of the slot in which the common RO is located;
a slot-level offset relative to a start moment of the slot in which the common RO is located;
a slot-level offset relative to an end moment of a PRACH slot in which the common RO is located;
a slot-level offset relative to a start moment of the PRACH slot in which the common RO is located;
a frequency offset relative to a first resource block of an active uplink bandwidth part;
the number of frequency domain multiplexing ROs;
the number of time domain multiplexing ROs;
a time interval between a plurality of time domain multiplexing ROs;
a frequency spacing between a plurality of frequency domain multiplexing ROs;
a configuration parameter for a preamble corresponding to the first RO; and
a mapping relationship between a common RO in a PRACH slot and the first RO; wherein
the common RO is a common configured RO used by the PRACH repetition transmission and PRACH non-repetition transmission.

21. The method according to claim 19, wherein the PRACH slot comprises at least one common RO group, and each common RO group corresponds to one first RO group.

22. The method according to claim 21, wherein the number of PRACH repetition transmissions of different first RO groups is independently configured.

23. The method according to claim 15, wherein the method further comprises:
sending RRC signaling to the terminal, wherein the RRC signaling indicates a target resource configuration type corresponding to the terminal.

24. The method according to claim 15, wherein the method further comprises:
in a first-type random access procedure, receiving PRACH repetition transmission from the terminal;
and/or
in a second-type random access procedure, receiving PRACH repetition transmission from the terminal.

25. The method according to claim 16, wherein the method further comprises:
in a first-type random access procedure, receiving PRACH non-repetition transmission from the terminal by using a common RO;
and/or
in a second-type random access procedure, receiving PRACH non-repetition transmission from the terminal by using a common RO, wherein
the common RO is a common configured RO used by the PRACH repetition transmission and PRACH non-repetition transmission.

26. A PRACH repetition transmission apparatus, comprising:
a first obtaining module, configured to obtain resource configuration information for physical random access channel PRACH repetition transmission, wherein the resource configuration information comprises a resource configuration type for the PRACH repetition transmission;
a first determining module, configured to determine, based on the resource configuration type, a random access channel occasion RO used for the PRACH repetition transmission; and
a first transmission module, configured to perform PRACH repetition transmission based on the RO.

27. The apparatus according to claim 26, wherein the resource configuration type comprises at least one of the following:
all ROs for PRACH non-repetition transmission are used for the PRACH repetition transmission;
part of ROs for PRACH non-repetition transmission are used for the PRACH repetition transmission; and
an independently configured first RO is used for the PRACH repetition transmission; wherein
the PRACH non-repetition transmission comprises PRACH non-repetition transmissions with one or more characteristics.

28. The apparatus according to claim 27, wherein the apparatus further comprises:
a second obtaining module, configured to obtain first information corresponding to the first RO; and
a second determining module, configured to determine the first RO based on the first information.

29. The apparatus according to claim 28, wherein the first information comprises at least one of the following:
the number of PRACH repetition transmissions;
a symbol-level offset relative to an end moment of a common RO;
a symbol-level offset relative to a start moment of the common RO;
symbol allocation in a slot in which the first RO is located is the same as symbol allocation in a slot in which the common RO is located;
indication information for indicating the symbol allocation in the slot in which the first RO is located, wherein the indication information is indicated by a PRACH configuration table of the common RO;
a symbol-level offset relative to an end moment of the slot in which the first RO is located;
a symbol-level offset relative to a start moment of the slot in which the first RO is located;
a slot-level offset relative to an end moment of the slot in which the common RO is located;
a slot-level offset relative to a start moment of the slot in which the common RO is located;
a slot-level offset relative to an end moment of a PRACH slot in which the common RO is located;
a slot-level offset relative to a start moment of the PRACH slot in which the common RO is located;
a frequency offset relative to a first resource block of an active uplink bandwidth part;
the number of frequency domain multiplexing ROs;
the number of time domain multiplexing ROs;
a time interval between a plurality of time domain multiplexing ROs;
a frequency spacing between a plurality of frequency domain multiplexing ROs;
a configuration parameter for a preamble corresponding to the first RO; and
a mapping relationship between a common RO in a PRACH slot and the first RO; wherein
the common RO is a common configured RO used by the PRACH repetition transmission and PRACH non-repetition transmission.

30. The apparatus according to any one of claims 27 to 29, wherein the first RO is a RO configured relative to the common RO; or
the first RO is a RO configured relative to the PRACH slot in which the common RO is located.

31. The apparatus according to claim 29, wherein the apparatus further comprises:
a resource mapping module, configured to perform resource mapping based on the mapping relationship between the common RO in the PRACH slot and the first RO.

32. The apparatus according to claim 31, wherein the resource mapping module is specifically configured to:
perform mapping on ROs in the PRACH slot and the first RO according to a first defined order; wherein
a mapping ratio of the ROs in the PRACH slot to the first RO is related to the number of PRACH repetition transmissions and/or the number of common ROs.

33. The apparatus according to claim 32, wherein the common RO in the PRACH slot for resource mapping is a valid common RO; and
the first RO for resource mapping is a valid RO configured relative to the PRACH slot.

34. The apparatus according to claim 30, wherein the PRACH slot comprises at least one common RO group, and each common RO group corresponds to one first RO group.

35. The apparatus according to claim 34, wherein the number of PRACH repetition transmissions of different first RO groups is independently configured.

36. The apparatus according to claim 27, wherein the first determining module comprises:
a first determining unit, configured to determine a target resource configuration type corresponding to the terminal from at least one resource configuration type; and
a second determining unit, configured to determine the RO, indicated in the target resource configuration type, for the PRACH repetition transmission.

37. The apparatus according to claim 36, wherein the first determining unit is specifically configured to:
receive radio resource control RRC signaling sent by a network-side device, wherein the RRC signaling indicates the target resource configuration type corresponding to the terminal;
or
determine the target resource configuration type based on whether the terminal receives the first information corresponding to the first RO.

38. The apparatus according to claim 26, wherein the first transmission module is specifically configured to:
in a first-type random access procedure, perform the PRACH repetition transmission;
and/or
in a second-type random access procedure, perform the PRACH repetition transmission.

39. The apparatus according to claim 26, wherein the apparatus further comprises: a second transmission module; and the second transmission module is configured to:
in a first-type random access procedure, perform the PRACH non-repetition transmission by using a common RO;
and/or
in a second-type random access procedure, perform the PRACH non-repetition transmission by using a common RO; wherein
the common RO is a common configured RO used by the PRACH repetition transmission and PRACH non-repetition transmission.

40. A PRACH repetition transmission apparatus, comprising:
a third determining module, configured to determine resource configuration information for PRACH repetition transmission, wherein the resource configuration information comprises a resource configuration type for the PRACH repetition transmission; and
a first sending module, configured to send the resource configuration information to a terminal.

41. The apparatus according to claim 40, wherein the resource configuration type comprises at least one of the following:
all ROs for PRACH non-repetition transmission are used for the PRACH repetition transmission;
part of ROs for PRACH non-repetition transmission are used for the PRACH repetition transmission; and
an independently configured first RO is used for the PRACH repetition transmission; wherein
the PRACH non-repetition transmission comprises PRACH non-repetition transmissions with one or more characteristics.

42. The apparatus according to claim 41, wherein the apparatus further comprises:
a configuration module, configured to configure the first RO based on the first information.

43. The apparatus according to claim 42, wherein the apparatus further comprises:
a second sending module, configured to send the first information to the terminal.

44. The apparatus according to claim 42, wherein the configuration module is specifically configured to:
configure, based on the first information, the first RO relative to a common RO;
or
configure, based on the first information, the first RO relative to a PRACH slot in which a common RO is located.

45. The apparatus according to any one of claims 42 to 44, wherein the first information comprises at least one of the following:
the number of PRACH repetition transmissions;
a symbol-level offset relative to an end moment of a common RO;
a symbol-level offset relative to a start moment of the common RO;
symbol allocation in a slot in which the first RO is located is the same as symbol allocation in a slot in which the common RO is located;
indication information for indicating the symbol allocation in the slot in which the first RO is located, wherein the indication information is indicated by a PRACH configuration table of the common RO;
a symbol-level offset relative to an end moment of the slot in which the first RO is located;
a symbol-level offset relative to a start moment of the slot in which the first RO is located;
a slot-level offset relative to an end moment of the slot in which the common RO is located;
a slot-level offset relative to a start moment of the slot in which the common RO is located;
a slot-level offset relative to an end moment of a PRACH slot in which the common RO is located;
a slot-level offset relative to a start moment of the PRACH slot in which the common RO is located;
a frequency offset relative to a first resource block of an active uplink bandwidth part;
the number of frequency domain multiplexing ROs;
the number of time domain multiplexing ROs;
a time interval between a plurality of time domain multiplexing ROs;
a frequency spacing between a plurality of frequency domain multiplexing ROs;
a configuration parameter for a preamble corresponding to the first RO; and
a mapping relationship between a common RO in a PRACH slot and the first RO; wherein
the common RO is a common configured RO used by the PRACH repetition transmission and PRACH non-repetition transmission.

46. The apparatus according to claim 44, wherein the PRACH slot comprises at least one common RO group, and each common RO group corresponds to one first RO group.

47. The apparatus according to claim 46, wherein the number of PRACH repetition transmissions of different first RO groups is independently configured.

48. The apparatus according to claim 40, wherein the apparatus further comprises:
a third sending module, configured to send RRC signaling to the terminal, wherein the RRC signaling indicates a target resource configuration type corresponding to the terminal.

49. The apparatus according to claim 40, wherein the apparatus further comprises: a first receiving module; and the first receiving module is specifically configured to:
in a first-type random access procedure, receive PRACH repetition transmission from the terminal;
and/or
in a second-type random access procedure, receive PRACH repetition transmission from the terminal.

50. The apparatus according to claim 41, wherein the apparatus further comprises: a second receiving module; and the second receiving module is specifically configured to:
in a first-type random access procedure, receive PRACH non-repetition transmission from the terminal by using a common RO;
and/or
in a second-type random access procedure, receive PRACH non-repetition transmission from the terminal by using a common RO, wherein
the common RO is a common configured RO used by the PRACH repetition transmission and PRACH non-repetition transmission.

51. A terminal, comprising a processor and a memory, wherein the memory stores a program or instructions capable of running on the processor, wherein when the program or instructions are executed by the processor, the steps of the PRACH repetition transmission method according to any one of claims 1 to 14 are implemented.

52. A network-side device, comprising a processor and a memory, wherein the memory stores a program or instructions capable of running on the processor, wherein when the program or instructions are executed by the processor, the steps of the PRACH repetition transmission method according to any one of claims 15 to 25 are implemented.

53. A readable storage medium, wherein the readable storage medium stores a program or instructions, and when the program or instructions are executed by a processor, the steps of the PRACH repetition transmission method according to any one of claims 1 to 14 are implemented, or the steps of the PRACH repetition transmission method according to any one of claims 15 to 25 are implemented.
